# EUROPEAN PATENT APPLICATION

(11) **EP 4 560 324 A1**
(43) Date of publication of application: **28.05.2025**
(21) Application number: 24169339.9
(22) Date of filing: 09.04.2024
(51) Int. Cl.: G01Q 40/00, G01Q 20/02

(54) **METHODS FOR POSITIONING A MEASUREMENT SPOT USING A SCANNING PROBE MICROSCOPE**

(30) Priority: 22.11.2023 US 202363602009 P
(71) Applicant: Oxford Instruments Nanotechnology Tools Limited, Abingdon, Oxon OX13 5QX (GB)
(72) Inventor: LEFEVER, Joel, Santa Barbara, CA 93117 (US); PROKSCH, Roger, Santa Barbara, CA 93117 (US); LABUDA, Aleksander, Santa Barbara, CA 93117 (US); ZHANG, Haigang, Santa Barbara, CA 93117 (US)
(74) Representative: Gill Jennings & Every LLP

(57) **Abstract**

Methods are provided for operating a scanning probe microscope. A first method comprises identifying the location of a measurement spot on the surface of the cantilever using a photodetector assembly, and executing a calibration procedure to identify a target region for positioning the measurement spot on the surface of the cantilever. A second method comprises identifying the cantilever, retrieving a target region for a measurement spot on the surface of the cantilever from memory based on the identified cantilever; and positioning the measurement spot in the target region.

## Description

### FIELD OF THE INVENTION

The invention relates to the operation of a scanning probe microscope (SPM), such as an atomic force microscope.

### REFERENCES

G. Binnig, C. F. Quate, and C. Gerber, Physical Review Letters 56 (9), 930 (1986).

Scanning Probe Microscopy - Principle of Operation, Instrumentation, and Probes, B. Bhushan and O. Marti (2011) DOI: 10.1007/978-3-642-15283-2_2

A. Labuda, M. Kocun, et al., Review of Scientific Instruments 87, 073705 (2016).

J. R. Lozano, D. Kiracofe, et al.,. Nanotechnology, 21 (46), (2010).

A. Labuda and R. Proksch, Applied Physics Letters 106, 253103 (2015).

A. Labuda, C. Cao, et al., Review of Scientific Instruments 89, 093701 (2018).

J. P. Killgore, L. Robins, & L. Collins. (2022). Electrostatically-blind quantitative piezoresponse force microscopy free of distributed-force artifacts. Nanoscale Advances, 4(8), 2036-2045.

M. J. Higgins, R. Proksch, J. E. Sader, M. Polcik, S. McEndoo, J. P. Cleveland, & S. P. Jarvis. (2006). Noninvasive determination of optical lever sensitivity in atomic force microscopy. Review of Scientific Instruments, 77(1), 013701.

US 10,705,114

US 11,644,478

EP 2297546

US 8,479,310

US 8,528,110

US 6643025

US 7441447

US 8261602

M. Ziatdinov, Y. T. Liu, K. Kelley, R. Vasudevan, and S. V. Kalinin, Acs Nano 16 (9), 13492 (2022).

S. V. Kalinin, J. J. Steffes, Y. T. Liu, B. D. Huey, and M. Ziatdinov, Nanotechnology 33 (5) (2022).

F. Y. Zhang, K. N. Williams, D. Edwards, A. B. Naden, Y. L. Yao, S. M. Neumayer, A. Kumar, B. J. Rodriguez, and N. Bassiri-Gharb, Small Methods 5 (12) (2021).

T. N. M. Nguyen, Y. C. Guo, S. Y. Qin, K. S. Frew, R. J. Xu, and J. C. Agar, Npj Computational Materials 7 (1) (2021).

Y. T. Liu, K. P. Kelley, R. K. Vasudevan, W. L. Zhu, J. Hayden, J. P. Maria, H. Funakubo, M. A. Ziatdinov, S. Trolier-McKinstry, and S. V. Kalinin, Small 18 (48) (2022).

Y. T. Liu, K. P. Kelley, R. K. Vasudevan, H. Funakubo, M. A. Ziatdinov, and S. V. Kalinin, Nature Machine Intelligence 4 (4), 341 (2022).

R. Proksch, R. Wagner and J. Lefever, https://arxiv.org/abs/2307.15795

### BACKGROUND OF THE INVENTION

Cantilever-based instruments are a class of devices that employ a cantilever 1000, a beam anchored at one end and free to move at the other, as a primary sensing or actuating component. These instruments have found widespread use in various applications due to their high sensitivity, resolution, and versatility. One notable example of a cantilever-based instrument is a scanning probe microscope (SPM), such as an atomic force microscope (AFM). However, the systems and techniques described here can be extended to other cantilever-based instruments and indentation systems as well.

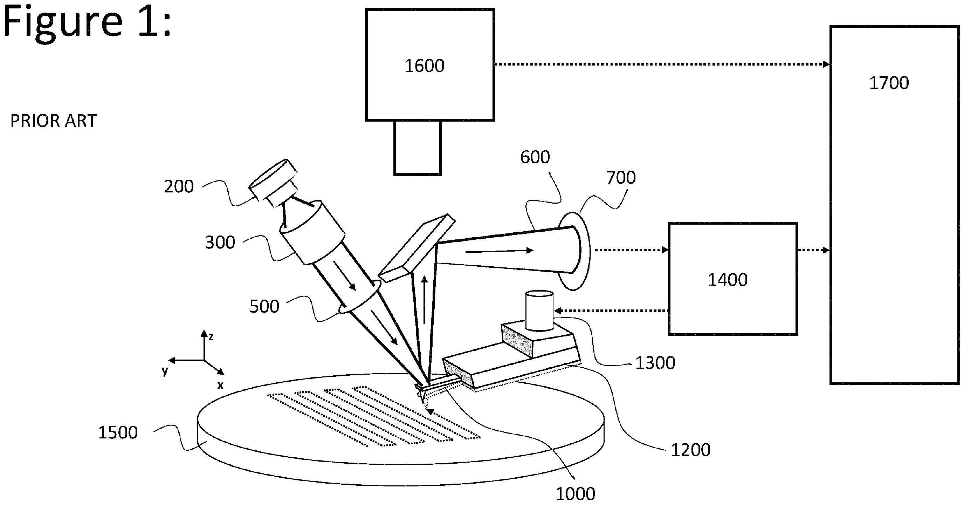

The atomic force microscope (AFM), because its combination of high resolution, environmental versatility and myriad combined measurement modalities has become a mainstay in nanoscience and technology. Typically, AFMs are based around flexible micromachined cantilevers with a sharp tip at the end that interacts with the sample. A common AFM configuration is shown in Figure 1, in which a laser or super luminescent diode 200 illuminates a focus apparatus 300, 500 to project a beam of light onto a cantilever shaped probe 1000, which is reflected 600 onto a detector 700. The motion of the light beam on the detector is used to calculate the deflection of the probe. A feedback loop 1400 may be used to control the distance between the tip and the sample 1500 using a vertical actuator 1300. The tip or sample may move in relative motion in a raster pattern to produce an image of the surface. A camera with a microscope objective 1600 is useful for positioning the probe 1000 relative to the sample 1500 and for positioning the detector spot on the probe 1000. Most AFMs have a separate computer control unit 1700 that is used to control, analyze and display signals from the AFM and through which the user interacts.

The force acting on the tip is in general a three-dimensional vector. In most applications, force measurements are made in the z-direction (in the reference frame of the cantilever). This axis of the cantilever is typically the "soft" axis, meaning that is the axis with the smallest stiffness or spring constant. The stiffness of the sensor along different directions (kᵢ, where i = x, y or z) are usually quite different. Since the forces on the apex of the tip are typically 3D, there will be movement of the apex in response to those forces given by δi = Fᵢ/kᵢ, where i = x, y or z.

In AFM operation, the measured deflection in any direction may be measured directly, for example to perform piezoelectric measurements; the measured force in any direction may be measured directly, for example to measure mechanical properties of materials; or the deflection may be used as an input to a feedback loop which is used to control the tip-sample separation, for example for imaging. Various deflection detection arrangements have been employed for AFM, but in each AFM operating mode, accurate knowledge of the sensitivity of the detector to the cantilever deflection is important.

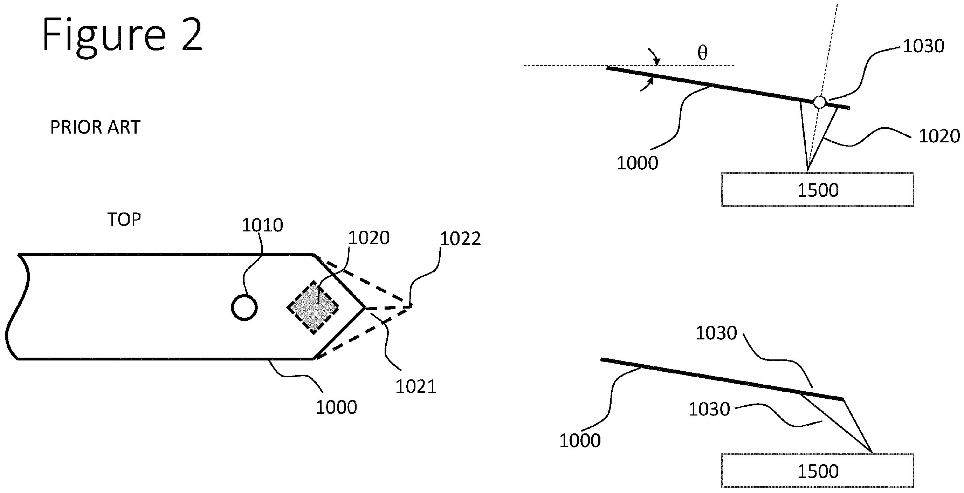

The AFM can be instrumented with a detector which may make use of the optical lever principle (also known as optical beam deflection or OBD) to measure the angle of deflection of the probe cantilever or use interferometry to measure the displacement of the cantilever. In general, the sensitivity of the detector to a change in spot position of a given distance depends on the cantilever mode shape. [Higgins et al., 2006] Because the optical lever measures an angle of deflection, it cannot in general detect the displacement of the cantilever for any arbitrary mode shape. By contrast, interferometric detection directly measures displacement as a distance. Therefore, the sensitivity of the detector to a change in cantilever position is independent of the cantilever mode shape, provided that the interferometric detection spot 1010 is coincident with the point on the cantilever at which the displacement is to be measured, which is usually the tip 1020 as shown in Figure 2. However, on some probe designs the tip is located at the end of the lever 1021 or even protrude beyond the flat portion of the probe body such as location 1022; in these cases it is not possible to place the spot directly over the tip.

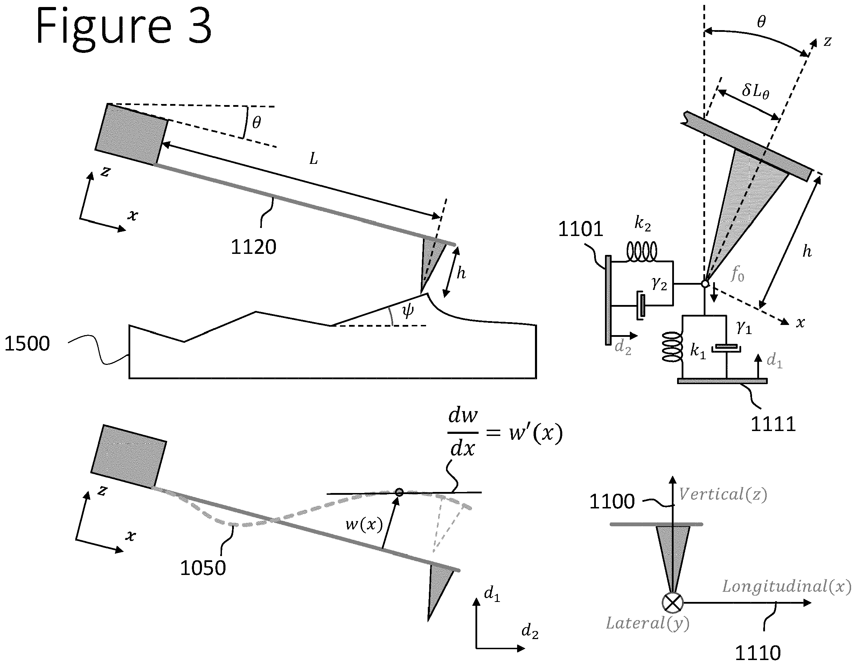

The cantilever mode shape response to external forces is a function of numerous factors, including direct mechanical and photothermal actuation by the AFM hardware, as well as the mechanical motion of the sample in both the normal and tangential directions, electrostatic forces, and friction. The shapes of the cantilever resulting from each of these individual effects are known as modes and are depicted in Figure 3. Fig. 3a shows an undeformed cantilever in contact with a surface. Under quasistatic conditions and in the absence of friction or lateral motion, pressing the cantilever into the sample or the sample into the cantilever produces equivalent mode shapes as shown in Figure 3b. This mode shape is derived directly from beam theory for a beam which is rigidly supported at the chip end and a rigid tip end, meaning that the kz>>kcant and that the tip is free to pivot. This mode shape may come about from indentation experiments, contact mode, piezoelectric force microscopy, or any other related mode known to those skilled in the art in which a downward force is applied to the base of the cantilever. If the probe and sample have relative charges, the probe may be either attracted to or repelled from the sample by electrostatic forces, as shown in Figure 3c. This may occur, for example, in piezo force microscopy. Figure 3c depicts a cantilever which is rigidly supported at the chip end and pin-connected at the tip end. An equivalent electrostatic effect may occur when the cantilever is not in rigid contact with the surface; in this case the cantilever may be modeled as rigidly connected at one end. The addition of a tangential force such as friction or tangential motion of the sample adds an additional mode shape, as shown in Figure 3d. These mode shapes are calculated assuming that the tip is rigid and therefore may be treated as a pin connection; however, any deformation of the tip could be interpreted as a superposition of normal motion (Figure 3b) and tangential motion (Figure 3d). When operating on or near the contact resonance frequency, inertial effects also cause the cantilever to deflect, producing an additional mode shape as shown in Figure 3e. Additional modes may be introduced due to other actuation techniques, such as photothermal excitation, viscous drag, magnetic actuation, Brownian motion, or shaking the tip or sample using any type of actuator known to those skilled the art. The actual shape of the cantilever is a superposition of all the effects described above. All of the above modes may also occur in modes in which the cantilever is held out of contact with the sample and actuated such that it comes into contact with the sample for a portion of its oscillation, such as occurs during certain imaging modes. In addition, all of the modes except for quasistatic normal actuation and tangential forces may also occur in a cantilever which is at rest, not in contact with but perhaps adjacent to a sample.

The detection spot on AFM probes may be positioned by any of various methods; commonly, the probe 1000 is mounted to a chip 1200 which is mounted into the AFM. The mounting configuration may be such that the chip 1200 and probe 1000 are automatically aligned with the detection spot, for example using alignment grooves on the chip and its holder. In this case, the detection spot may or may not be able to move; however, the uncertainty in this positioning system is on the order of several microns due to manufacturing tolerances and is not adequate for certain operating modes where accurate spot position is critical, including piezoelectric force microscopy. Moreover, it is not compatible with probes which do not feature the necessary alignment devices or which feature multiple cantilevers on a single chip. More commonly, the probe may be manually installed into a holder without rigid alignment devices. In this case, as with some cases where alignment devices are provided, the detection spot must be positioned either manually or automatically.

Manual positioning of the detection spot is commonly accomplished by moving the probe, the detection spot, or the field of view of the AFM optics system until the spot is visible on the backside of the cantilever, as viewed using the AFM optics system. Alternatively, the spot may be positioned by directly visually observing the light of the detection spot in the instrument and moving the probe, spot, or optics until the detection spot is obscured by the probe. Several automated methods for alignment exist: for example, the user may indicate the position of the probe on a camera view window. Alternatively, a control system may automatically move the probe in some pattern until the light of the detection system is identified in a photodetector 700. Image correlation techniques may also be used to identify the location and/or orientation of the probe in the camera view, after which the probe or detection spot are moved into position. Other methods known to those skilled in the art may also be employed. Typically these approaches are chosen to optimize the intensity of the light signal observed by the detector or to optimize the sensitivity of the system for optical beam detection. Moreover, they are generally inadequate for achieving precise alignment between the detection spot 1010 and the tip 1020, because the tip 1020 is not usually visible in the camera and the position of the tip varies by a few microns due to manufacturing tolerances.

Past work has established a means to identify when the detection spot is nearly over the tip by observing a flat frequency response of the IDS detector around the contact resonance frequency of the cantilever when the force between the cantilever body and sample is being modulated with electrostatic forces. Placing the spot at this position can be a pain point for users, depending on the degree of accuracy. It would be desirable to simplify this process. In addition, electrostatic actuation is not universally available, and it is desirable to be able to use other excitation methods.

Numerous methods are known to be useful for determining the sensitivity of the optical beam deflection system or interferometric detection system for a particular cantilever; for example, one common technique is based on pressing the probe into a surface which is usually very stiff, while the resulting deflection of the cantilever is measured. The sensitivity may be calculated as the slope of a linear fit between the deflection of the cantilever and the vertical motion of the base of the probe. Another method for determining the sensitivity of an AFM is to use the commercially available GetReal^{™} tool offered by the assignee of this patent.

However, optical beam detection does not in general have single defined value for the sensitivity which is expected for any specific configuration, because the sensitivity to optical beam detection is dependent on the cantilever geometry and the brightness of the optical beam, which are not constant for across multiple AFMs, all probes of the same design, or all possible positions of probes in their holders. Therefore, it is not generally possible to use the value of the optical beam sensitivity to decide whether the spot is appropriately positioned or in what direction it ought to be moved. By contrast, with interferometric detection, there exists a theoretical value for the sensitivity which may be calculated based on the geometry of the AFM, the wavelength of light, and the calculations that are performed electronically.

EP 2297546 and US 8528110 describe a configuration for accurate measurement of the topography of a sample using scanning probe microscopy in conjunction with an interferometric detection system and highlights a means of positioning the detection spot over the probe to achieve a desired sensitivity. That prior art specifically teaches using the sample reference frame as the interferometer reference. This represents a variation on other AFMs that have separate sensors for measuring sample height. That prior art is concerned solely with calibrating the topography measurement of a sample, not with calibrating the deflection of the cantilever for example to measure applied forces or oscillation amplitudes, as is the case here. Another shortcoming of this approach is that it does not measure functional properties of a sample such as the piezoresponse or mechanical properties.

### SUMMARY OF INVENTION

### Introduction

It is desirable to make cantilever deflection measurements, commonly applied to AFM, more quantitative. Many AFM measurements are subject to calibration errors; mechanical, electrical or optical coupling; and uncertainties in the measurements. It is desirable to improve on this situation with a more precise, accurate and therefore interpretable measurement of the cantilever motion.

Cantilever displacement may be measured using optical means, for which it is necessary to precisely position the spot 1010 on the probe cantilever 1000. For convenience, the measurement may apply to the lever of an atomic force microscope (AFM). Optical beam deflection (OBD) has been the most popular means to measure displacement; however, interferometric detection may also be used. Both interferometric and optical beam detection suffer from position-dependent sensitivities. If the spot 1010 is positioned directly above the probe tip 1020, the displacement of the cantilever 1000 as measured by interferometry may be taken to be the same as that of the tip 1020, when the tip is sufficiently stiff. In this position, dynamic effects are minimized when the tip is in contact with a surface. Otherwise, if the spot position is known with high precision, the ratio between the displacement of the interferometric spot 1010 and the displacement of the tip 1020 may be determined. Several methods are described for each step in the process of determining the spot position relative to the tip such that the sensitivity may be ascertained.

AFMs may be operated in any of various modes; for example, in contact mode, the cantilever tip is pressed into a surface with a force that is usually maintained to be constant using a feedback loop operating on the deflection signal. This mode may be used to image or measure friction forces. In tapping mode AFM, the cantilever is oscillated near the surface, usually at or near the cantilever resonance frequency. The separation distance between the tip and the sample is maintained using a feedback loop operating on the amplitude of the oscillation, which is itself measured using a lock-in amplifier. This mode may be used to image or measure sample mechanical properties. In piezoelectric force microscopy, the cantilever is maintained in continuous contact with the surface using a feedback loop as in contact mode, but an oscillating voltage bias is applied to the tip, causing the sample to deflect. The sample deflection is measured by way of the cantilever deflection, which is measured using a lockin amplifier. In these modes, the sample or tip are usually moved relative to each other in a raster pattern known as scanning for the purpose of imaging. The vertical and scanning motions of the tip and/or sample are commonly provided using a piezoelectric actuator; however, any actuation mode known to those skilled in the art may be used.

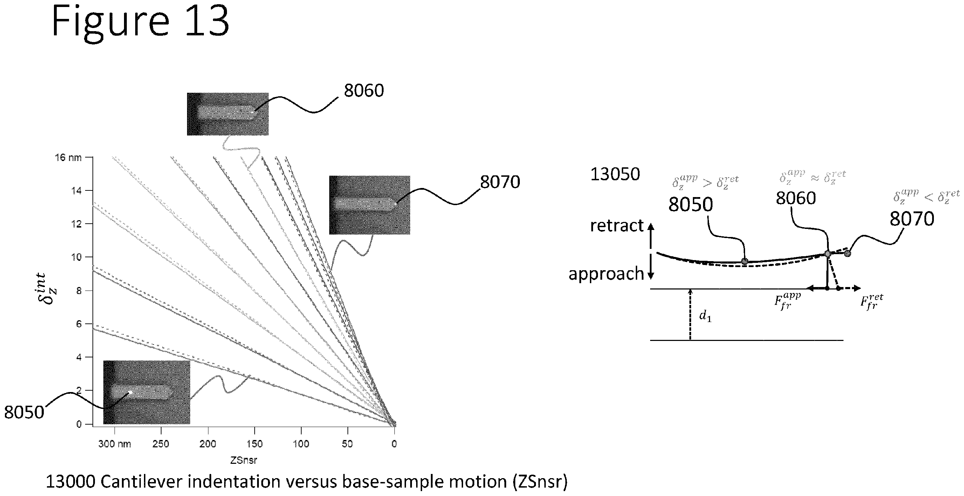

Another mode of operation is a force curve, also known as a force spectroscopy measurement or indentation experiment. In this experiment technique, the cantilever probe or sample are actuated in relative motion such that the probe tip is driven into the sample and subsequently withdrawn, as shown in Figure 13. This method may be used to measure the mechanical properties of the sample. Alternatively, especially if both the tip and sample are much more rigid than the cantilever, this measurement technique may be used to produce a calibration of the sensitivity of the detector to the cantilever deflection by fitting a line to the relationship between detector voltage and tip/sample motion. This relationship is shown in Figure 13 for various detection spot positions.

A thermal or thermal tune is a means to measure the response of a cantilever to thermal actuation, which may be used to calibrate the stiffness of the cantilever or the sensitivity of the detector to deformation. In a thermal tune, the cantilever is left at rest while its position is measured for some duration of time at a sufficiently large sampling rate to capture the relevant dynamics. A power spectral density of the position data is then collected; from this data the resonance frequencies of the eigenmodes may be attained and the stiffness of the cantilever or the sensitivity of the detector may be calculated using the equipartition theorem.

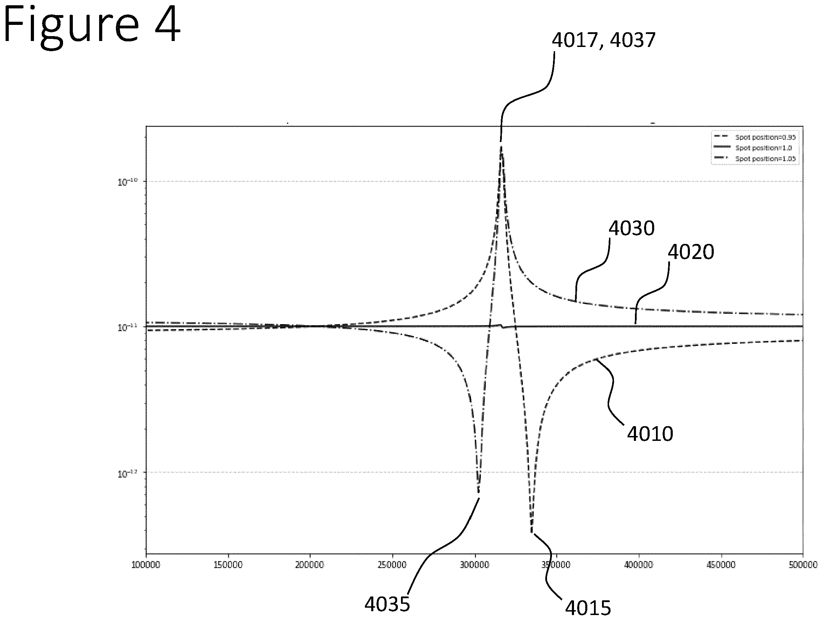

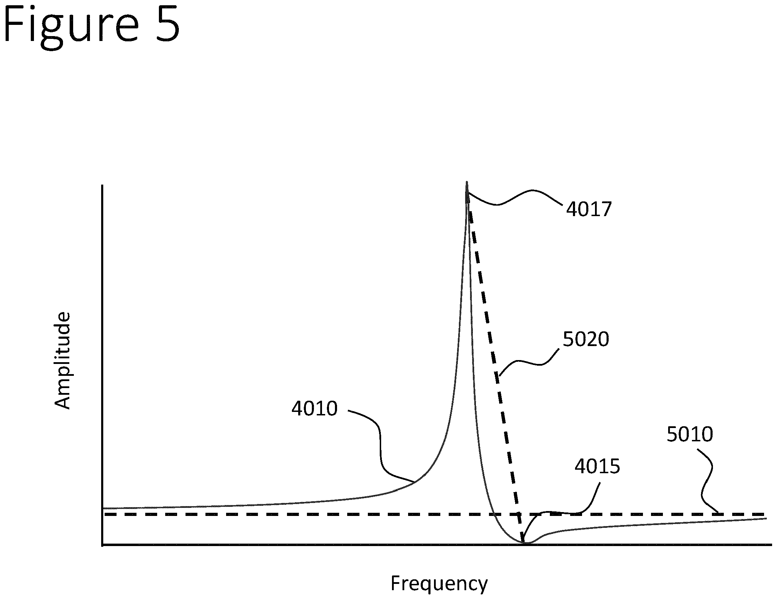

A driven tune is a measurement in which the cantilever is actuated at multiple frequencies in a range. Commonly, the cantilever is actuated using a piezoelectric actuator which oscillates the tip or sample or using a photothermal actuator provided for the purpose. However, any actuation method known to those skilled in the art will suffice. In conventional tapping mode, the driven tune is performed while the tip is not in contact with the sample; in other modes such as contact resonance measurements and piezoelectric force microscopy, the driven tune may be performed while the cantilever is held in contact with the sample. In the latter case, other additional drive methods may be used, such as piezoelectric actuation of the sample or a piezoelectric actuator that is mechanically connected to the sample. An oscillating actuation drive signal is applied to the cantilever and the frequency of oscillation is varied through a range, typically while the amplitude of the drive signal is held constant. At each frequency, the amplitude of the response signal and the phase lag between the cantilever response and the drive signal may be recorded. The driven tune is commonly used to identify the frequencies of cantilever oscillation eigenmodes and to determine an appropriate amplitude of the driving signal to produce the desired oscillation amplitude. A driven tune in contact driven by piezoelectric actuation is shown in Figures 4 and 5.

In certain modes of actuation, for example in piezoelectric force microscopy, the cantilever features a contact resonance frequency at which the amplitude of oscillation is at a local maximum, indicated by locations 4012, 4037 in Figure 4; this is described as an antiresonance of the response. In addition, there may be one or more frequencies at which the various actuation dynamics such as piezoelectric and electrostatic actuation cancel out, producing a local minimum at location 4015 or 4035. The exact frequencies at which the resonance and antiresonance occur, as well as the magnitudes of the amplitudes at the resonance and antiresonance, are dependent on the position of the spot and the position of the tip, as well as the load applied to the probe and other factors. If the detector measures displacement directly, such as is achieved using interferometric detection, if the tip and sample are sufficiently rigid, and if additionally the detection spot 1010 is located above or nearly above the tip 1020, the resonance and antiresonance may cancel to produce a flat amplitude response 4020. If the tip and sample are not sufficiently rigid, there may still be a location of the detection spot at which the cantilever amplitude response is flat; however, in general the detection spot position may not be directly above the tip.

Depending on the AFM operating mode, it is possible that more than one effect causes cantilever to deflect. For example, in piezoelectric force microscopy the cantilever mode shape is a superposition of several effects as described in Figure 3. Some combination of a load applied to the cantilever from some combination of externally applied load and the piezoelectric response of the sample causes cantilever deflection in accordance with static beam theory as shown in Figure 3b. Electrostatic forces due to differences in charge between the tip and sample also cause a body force on the cantilever, as shown in Figure 3c. In-plane forces between the sample and tip, such as due to friction or in-plane motion of the sample, may also cause a deformation of the cantilever as shown in Figure 3d. If the loading or tip bias is not constant in time, inertial effects may also occur which increase tip motion as shown in Figure 3e. The actual deformation of the cantilever is a superposition of all of these actuation modes, and possibly other actuation modes.

The effects of long-range electrostatic interactions and longitudinal frictional forces has been studied in detail elsewhere (see R. Proksch, R. Wagner and J. Lefever https://arxiv.org/abs/2307.15795 and references therein). One notable conclusion of these studies is that both IDS and OBD spot positions can be located at null points - meaning points where the sensitivity to various tip-sample forces or body-electrostatic forces vanishes. These vanishing points are convenience when one is trying to accurately quantify the response of the sample to other forces. In the reference noted above, when the IDS spot is above the tip, the measured displacement was shown to only depend on the vertical tip displacement, the effects of longitudinal and BES forces vanish at that point for IDS measurements. In the case of OBD measurements, it is possible to position the OBD spot at a null point as well. However, in contrast to IDS measurements, the null point depends on the relative magnitudes of the various interactions and therefore, it is difficult or impossible to make accurate vertical OBD measurements when both longitudinal and BES forces are present.

Numerous designs of AFM cantilever have been produced commercially; of these, some are designed such that the tip 1020 is located underneath the probe cantilever body 1000 as shown in Figure 2. Other designs of AFM cantilever, known as visible-apex probes, locate the tip such that it is at the end of the lever 1021, typically so that the user may directly observe the position of the tip on a sample. Some designs instead place the tip so that it extends beyond the end of the flat portion of the probe cantilever body, as indicated by point 1021. In these latter two designs of cantilever, it is in general not possible to position the detection spot 1010 directly over the tip while achieving a suitable reflected signal, as is preferred for interferometric detection. Therefore the implicit calibration of the interferometer is not valid, and, as with optical beam deflection, another means must be devised for calibrating the sensitivity of the detector.

One attempt to provide 3D force information using a force sensor for a probe based instrument was dubbed the FIRAT. In this approach, the force sensor had a detection surface and a flexible mechanical structure above the detection surface so as to form a gap between the flexible mechanical structure and the detection surface. This flexing was then measured with a reflective diffraction grating positioned along the optical axis and positioned a distance from the optical port.

### Aspects of the invention

A first aspect of the invention provides a method for operating a scanning probe microscope. A scanning probe microscope is an example of a cantilever-based instrument. The scanning probe microscope comprises: a probe having a cantilever with a tip; a sample and a sample holder arranged to hold the sample for measurement using the tip of the cantilever; a light source arranged to emit a beam of light onto a surface of the cantilever, the beam forming a measurement spot on the surface of the cantilever; an actuator assembly configured to adjust the separation between the tip and the sample along the optical axis of the light source; an optical assembly configured to adjust the position of the measurement spot on the surface of the cantilever; and a photodetector assembly for measuring light reflected from the surface of the cantilever to locate the surface of the cantilever and to measure motion of the cantilever from light reflected from the measurement spot. The method comprises executing a computer program to cause the scanning probe microscope to perform each of the following steps: identifying the location of the measurement spot on the surface of the cantilever using the photodetector assembly; and executing a calibration procedure to identify a target region for positioning the measurement spot on the surface of the cantilever.

This method advantageously enables the position of the measurement spot to be determined using a calibration procedure. The relative position of the measurement spot and the tip can impact the measured cantilever motion. Using this method, the measurement spot can advantageously be located in a particular location on the surface of the cantilever, such as a location directly above the tip. Alternatively, this method can be used to determine an offset between the measurement spot and the tip.

The motion of the cantilever is measured from light reflected from the measurement spot. The measured motion may for example be a displacement when using interferometric detection (IDS) or may be a deflection when using optical beam deflection (OBD). Depending on the location of the measurement spot on the surface of the cantilever, the measured motion of the cantilever may be influenced by a mixture of cantilever displacement and deflection.

The calibration procedure can be used to determine whether the measurement spot is in the target region. The target region may differ depending on the properties of the tip and/or the cantilever.

In this method, the location of the measurement spot can be identified using the photodetector assembly, for example by monitoring the signal strength of the reflected light. In such an example, when the measurement spot impinges on the surface of the cantilever, the signal strength is a first, high, value, and when the measurement spot is not directed at the surface of the cantilever, the signal strength is a second, low, value. The difference between the first and second values is significant and therefore the locations of the edges of the cantilever can be roughly identified in this way. In addition, or alternatively, the location of the measurement spot may be identified using a camera configured to image the surface of the cantilever. The camera may form part of the optical assembly. A *priori* knowledge of the cantilever shape and size that is either stored in the AFM software or entered by the AFM user may aid in the identification of the cantilever through the camera view. In this way, inspection of the image enables the measurement spot to be located on the surface of the cantilever. In any case, the measurement spot can be adjusted using the optical assembly so that it is located on the surface of the cantilever. Preferably the measurement spot is located at a nominal location on the surface of the cantilever at which the calibration procedure can be executed. The positional adjustment of the measurement spot may be performed manually or automatically according to known techniques.

The executed calibration procedure may take different forms. Each calibration procedure described herein may be performed iteratively. Furthermore, a plurality of calibration procedures may be performed sequentially or in parallel.

Some calibration procedures may comprise the following steps: (i) monitoring a first variable at a nominal location on the surface of the cantilever whilst modifying a second variable, wherein the first variable relates to cantilever motion and the second variable relates to an interaction between the tip and the sample, wherein the first variable depends on the second variable; (ii) calculating a first parameter based on the variation of the first variable in step (i); and (iii) estimating the proximity of the nominal location to the target region based on the calculated first parameter; wherein the nominal location is determined to be within the target region if the calculated first parameter is within a threshold.

The first variable relates to cantilever motion and may, for example, be cantilever displacement, cantilever deflection or amplitude of the cantilever motion. The second variable relates to an interaction between the tip and sample, and may, for example, be a force, a driving frequency or a tip location for example whilst scanning. The first parameter is based on the variation of the first variable and may, for example, be a difference in cantilever motion.

Advantageously, the calibration procedure can be used to determine whether or not the nominal location is in the target region. The target region is preferably a region in which the impact of external factors is satisfactorily low. For example, the target region may comprise a region in which the impact of cantilever deflection is minimal, preferably substantially zero, on the measured cantilever displacement. This means that the calibration procedure can be used to determine whether the imaging will be acceptable with the measurement spot in the nominal location, or whether the position of the measurement spot needs to be adjusted to improve the imaging quality.

The outcome of step (iii) may be binary, i.e. the nominal location may be determined to be within the target region if the calculated first parameter is within a threshold and, alternatively, the nominal location may be determined to be outside the target region if the calculated first parameter exceeds the threshold. Optionally, when the calculated first parameter matches the threshold the nominal location may be determined to be within the target region.

Optionally, the outcome of step (iii) may be linear, or follow another predetermined function such that the proximity of the nominal location to the target region can be quantified.

Optionally, the calibration procedure may further comprise the following steps: (iv) adjusting the location of the measurement spot to a further nominal location on the surface of the cantilever if the calculated first parameter exceeds the threshold; (v) monitoring the first variable at the further nominal location on the surface of the cantilever whilst modifying the second variable; (vi) calculating a second parameter based on the variation of the first variable in response to the second variable; and (vii) estimating the proximity of the further nominal location to the target region based on the calculated second parameter; wherein the further nominal location is determined to be within the target region if either: the calculated second parameter is within the threshold; or the magnitude of the calculated second parameter is less than the magnitude of the calculated first parameter.

Advantageously, the calibration procedure can be iteratively performed to locate the target region. In this example, the position of the measurement spot is adjusted to a further nominal location on the surface of the cantilever which is different from the previous nominal location. This is an optional step which is performed if the nominal location is not within the target region, i.e. does not have satisfactory cantilever dynamics for imaging. The size of the target region may vary according to user imaging requirements. For example, if the accuracy of the imaging is of less importance, the size of the target region may be larger than if the accuracy of the imaging is of critical importance.

At the further nominal location, a second parameter is calculated. The second parameter can either be compared with the threshold or with the previous calculated parameter, i.e. the calculated first parameter, to determine the proximity of the further nominal location to the target region. In the event that the second parameter is compared with the threshold, the threshold is preferably the same as the threshold with which the calculated first parameter was compared. That is, for a particular calibration procedure, the threshold, corresponding to the size of the target region, is preferably the same.

Optionally the threshold may be a positive or negative value. Preferably the magnitude of the values of the first, and optionally second, parameters are compared with the threshold, or the magnitude of the calculated second and first parameters are compared. The magnitude of the calculated second parameter being less than the magnitude of the calculated first parameter advantageously indicates that the further nominal location is closer to an ideal location within the target region.

Preferably, step (iv) comprises adjusting the location of the measurement spot in a first direction if step (ii) indicates that the first parameter is negative, and wherein step (iv) comprises adjusting the location of the measurement spot in a second direction, opposite the first direction, if step (ii) indicates that the first parameter is positive.

This advantageously guides the adjustment of the position of the measurement spot during an iterative calibration procedure. In this example, the value of the first parameter may be zero at a null point within the target region. Elsewhere, the value of the first parameter may be positive or negative, and this advantageously indicates the relative positioning of the tip and the measurement spot. This means that the position of the measurement spot can be adjusted towards the target region, and optionally towards the null point within the target region, based on the sign of the calculated first parameter.

Optionally, the first direction and the second direction may be along a major axis of the cantilever. For example, the cantilever may be substantially rectangular having a major axis running longitudinally along the length of the cantilever. This means that adjustments can be made along the length of the cantilever. Alternatively, the first direction and the second direction are perpendicular to a major axis of the cantilever. This means that adjustments can be made along the width of the cantilever.

The above describes one-dimensional adjustments in response to the calculated parameters. When parameters are calculated at a plurality of nominal locations, the position of the tip relative to the measurement may be determined both along the major axis, and perpendicular to the major axis, of the cantilever.

In a possible calibration procedure, the first variable may be cantilever motion; the second variable may be an interaction force between the tip and the sample, wherein the actuator assembly is operated to adjust the interaction force between the tip and the sample; and the first parameter may be a difference in motion of the cantilever at the nominal location when the cantilever is moved towards the sample to increase the interaction force compared with when the cantilever is moved away from the sample to decrease the interaction force.

Accordingly, the calibration procedure may comprise the following steps: (i) monitoring cantilever motion at a nominal location on the surface of the cantilever whilst modifying an interaction force between the tip and the sample, wherein the actuator assembly is operated to adjust the interaction force between the tip and the sample; (ii) calculating a difference in motion of the cantilever at the nominal location when the cantilever is moved towards the sample to increase the interaction force compared with when the cantilever is moved away from the sample to decrease the interaction force; and (iii) estimating the proximity of the nominal location to the target region based on the calculated difference in motion of the cantilever; wherein the nominal location is determined to be within the target region if the calculated difference in motion of the cantilever is within a threshold.

This approach implements a measurement technique referred to as a "force-curve" in the art. The interaction force is preferably attractive, and increases, as the tip approaches the sample. The interaction force is preferably repulsive, and decreases, as the tip is moved away from the sample. The interaction force may be a contact force, for example.

Advantageously, this is a simple technique that is straightforward to perform. As described above, if the difference in motion of the cantilever motion (for example, cantilever displacement), is substantially zero for the approach and retract curves, it may be determined that the measurement spot is substantially aligned with the tip. As the distance between the measurement spot and the tip increases, the difference in displacement between measurements taken in the two directions typically increases due to frictional forces influencing the measured cantilever motion. In this way, the proximity to the target region can be determined based on the difference in cantilever motion.

The first parameter, i.e. the difference in motion of the cantilever, is preferably negative when the cantilever motion is larger when the cantilever is moved towards the sample than away from the sample, and the first parameter is preferably positive when the cantilever motion is smaller when the cantilever is moved in towards the sample than away from the sample.

In another possible calibration procedure, the calibration procedure may comprise bringing the tip into contact with the surface of the sample, and: the first variable may be an amplitude of the cantilever motion; the second variable may be a driving frequency, wherein the actuator assembly is operated to modulate the separation between the tip and the sample across a range of driving frequencies; and the first parameter may be a characteristic of the amplitude variation which depends on a frequency difference and/or an amplitude difference between a resonance at which the amplitude of the cantilever motion is largest and an anti-resonance at which the amplitude of the cantilever motion is smallest. Optionally, the first parameter may be based on a resonance (i.e. a resonant peak) at which a quantity indicative of the amplitude of the cantilever motion is largest and an anti-resonance (i.e. anti-resonant peak) at which a quantity indicative of the amplitude of the cantilever motion is smallest. In this way, the first parameter characterises the amplitude response of the cantilever.

Accordingly, the calibration procedure may comprise the following steps: (i) monitoring an amplitude of the cantilever motion at a nominal location on the surface of the cantilever whilst modifying a driving frequency, wherein the actuator assembly is operated to modulate the separation between the tip and the sample across a range of driving frequencies; (ii) calculating a first parameter which is a characteristic of the amplitude variation which depends on a frequency difference and/or an amplitude difference between a resonance at which the amplitude of the cantilever motion is largest and an anti-resonance at which the amplitude of the cantilever motion is smallest; and (iii) estimating the proximity of the nominal location to the target region based on the calculated first parameter; wherein the nominal location is determined to be within the target region if the calculated first parameter is within a threshold.

For example, the properties of a resonance and an anti-resonance in the frequency response may be determined. The properties typically include the frequency and the amplitude. Typically, the relative location of the resonance and anti-resonance (i.e. resonance and anti-resonance) and their amplitudes are indicative of the relative location of the tip, tending to zero when the measurement spot is aligned with the tip along the optical axis.

Advantageously, this calibration procedure is sensitive to small offsets between the measurement spot and the tip along the optical axis. Accordingly, when the chosen target region is small, this calibration procedure is particularly effective.

The separation between the tip and the sample can be driven at a range of frequencies using the actuator assembly. Optionally, the actuator assembly may be configured to modulate the separation between the tip and the sample by moving the sample or by moving the tip. Modulation of the separation between the tip and the sample advantageously achieves a modulation in the force between the tip and the sample.

The response of the oscillatory cantilever motion, i.e. the variation in amplitude of oscillations at different driving frequencies, can be characterised in a number of different ways to estimate the proximity of the nominal location to the target region. Optionally, calculating the first parameter in step (ii) may comprise calculating the frequency difference between the resonance and the anti-resonance. The resonance may be at a lower frequency than the anti-resonance when the nominal location is offset in a first direction from a null point within the target region, and the resonance may be at a higher frequency than the anti-resonance when the nominal location is offset in a second direction from the null point within the target region, wherein the second direction is substantially opposite to the first direction. Accordingly, the sign of the frequency difference may be indicative of the direction in which the measurement is offset. Therefore, calculating the frequency difference may comprise subtracting the frequency of the resonance from the frequency of the anti-resonance, or subtracting the frequency of the anti-resonance from the frequency of the resonance. Advantageously, the change in relative position of the resonance and anti-resonance is dependent on the offset direction, and therefore this provides a clear indication of in which direction to adjust the position of the measurement spot on the surface of the cantilever.

Alternatively, calculating the first parameter in step (ii) may comprise calculating the amplitude difference between the resonance and the anti-resonance. Advantageously, the amplitude difference when the measurement spot is offset from the tip is large, and therefore this is a sensitive measurement. The amplitude difference may be used in combination with the frequency difference. In some examples, both parameters may be calculated and used to perform the estimation in step (iii).

In other examples, the frequency and amplitude information may be used in combination to calculate a single first parameter. For example, calculating the first parameter in step (ii) may comprise dividing the amplitude difference between the resonance and the anti-resonance by the frequency difference between the resonance and the anti-resonance, or dividing the frequency difference between the resonance and the anti-resonance by the amplitude difference between the resonance and the anti-resonance. This returns a gradient, or slope. Advantageously this characterises the amplitude response of the cantilever motion in a single parameter, thereby simplifying the calibration procedure. The gradient will be positive or negative depending on the relative location of the resonant and anti-resonant peaks.

Generally, the response of the oscillatory cantilever motion can be characterised in a number of manners. Preferably, a quantity that is indicative of the sensitivity of the amplitude changes in response to frequency is calculated to estimate the proximity of the nominal location to the target.

In a further possible calibration procedure, the calibration procedure may comprise bringing the tip into contact with the surface of the sample, and: the first variable may be cantilever motion; the second variable may be the location of the tip in the plane of the sample, wherein the tip is moved in a third direction across the sample and a fourth direction opposite to the third direction; and the first parameter may be a difference in motion in the third and fourth directions.

Accordingly, the calibration procedure may comprise the following steps: (i) monitoring cantilever motion at a nominal location on the surface of the cantilever whilst modifying the location of the tip in the plane of the sample, wherein the tip is moved in a third direction across the sample and a fourth direction opposite to the third direction; (ii) calculating a difference in motion in the third and fourth directions; and (iii) estimating the proximity of the nominal location to the target region based on the difference in cantilever motion in the third and fourth directions; wherein the nominal location is determined to be within the target region if the difference in cantilever motion is within a threshold.

For example, cantilever displacement may be measured using interferometric detection whilst scanning back and forth along a line. Typically, the difference in each of the third and fourth directions is minimised in the target region.

It is understood that the sample may be substantially planar, having local topological variations. Optionally, the sample may be substantially horizontal.

Optionally, the third direction and the fourth direction may be substantially parallel to a major axis of the cantilever. This results in a scan along the zero axis. This can advantageously be used to calibrate the location of the measurement spot relative to the tip along the major axis of the cantilever. Alternatively, the third direction and the fourth direction may be substantially perpendicular to the major axis of the cantilever and along the surface of the cantilever, which is also referred to as the minor axis of the cantilever. This results in a scan perpendicular to the zero axis. This can advantageously be used to calibrate the location of the measurement spot relative to the tip perpendicular to the major axis of the cantilever.

In another possible calibration procedure, the height of the sample varies across a first region on the surface of the sample to form a sample step. In this case, the scanning probe microscope may further comprise a camera, and the calibration procedure may comprise: (i) adjusting the location of the measurement spot to be within the first region; (ii) imaging the first region with the camera to detect the position of the sample step and the position of the measurement spot; (iii) bringing the tip towards the surface of the sample in the first region; (iv) monitoring the cantilever motion when the measurement spot is positioned at a nominal location on the surface of the cantilever whilst scanning the tip across the first region comprising the sample step to detect the position of the sample step; (v) correlating the measurements In steps (ii) and (iv) to determine the relative position of the measurement spot and the tip; and (vi) adjusting the location of the measurement spot based on the determined relative position.

In this calibration procedure, the position of the sample step is detected using both the tip and the camera: the step is scanned using the scanning probe microscope; and the first region is imaged to detect the relative position of the sample step and the measurement spot. Both steps (ii) and (iv) employ the measurement spot: directed at the surface of the cantilever; and located within the first region imaged with the camera. Accordingly, correlating the measurements obtained using both the tip and the camera advantageously enables an estimate of the relative position of the measurement spot and the tip to be inferred.

This calibration procedure advantageously uses a combination of SPM scanning and camera imaging to estimate the position of the tip. The location of the measurement spot can therefore be adjusted such that it aligns with the tip along the optical axis.

Alternatively, the measurement spot could be used to detect the position of the sample step by interferometric detection using the photodetector assembly. In this case, the calibration procedure would comprise the following steps: (i) emitting the beam of light onto the sample and moving the measurement spot across the first region to detect the position of the sample step by interferometric detection using the photodetector assembly; (ii) bringing the tip into contact with the surface of the sample in the first region; (iii) monitoring the cantilever motion when the measurement spot is positioned at a nominal location on the surface of the cantilever whilst scanning the tip across the first region comprising the sample step to detect the position of the sample step; (iv) correlating the measurements in steps (i) and (iii) to determine the relative position of the measurement spot and the tip; and (v) adjusting the location of the measurement spot based on the determined relative position.

The sample step may be formed by selectively removing material from the sample in the first region or by selectively adding material to the sample in the first region. For example, the sample step may be formed by cutting, scratching, or indenting the sample to selectively remove material from the sample; or the sample step may be formed by adding a layer such as a photoresist or other polymeric layer.

Advantageously, selective removal of material in the manners described can be achieved locally at the edge of a sample without impacting the remainder of the sample. Optionally, a sample may be prepared specifically for use with the calibration procedure with an all-over patterned polymer layer. Advantageously, such a sample may comprise a plurality of sample steps thus facilitating the location of a first region comprising a sample step.

To perform a possible calibration procedure, the scanning probe microscope may further comprise a camera, and the calibration procedure may comprise: (i) acquiring an image of the tip using the camera; (ii) identifying the location of the tip from the image; and (iii) estimating the target region based on the tip location. The location of the tip in the image may be automatically recognised, for example by machine learning, and the coordinates of the target region on the cantilever thereby inferred. Advantageously, this calibration procedure does not require a complex set up. Optionally therefore, this calibration procedure may be performed to estimate the location of the target region before performing another possible calibration procedure described herein.

In some cases the sample may be a reflective sample. In these cases, the image of the tip may comprise an image of a reflection of the tip in the sample. Advantageously, the reflection of the tip in the sample provides an image of the underside of the cantilever. This shows the tip which is not typically visible when viewing the surface of the cantilever, for many cantilevers.

Optionally, the scanning probe microscope may further comprise one or more mirrors optically arranged to reflect light from a side of the cantilever into the camera, the side being substantially perpendicular to the surface of the cantilever on which the measurement spot is formed, wherein the image of the tip in step (i) may be an image of the side of the cantilever. Advantageously, this is not dependent on the sample properties and can therefore always be performed.

Preferably, the calibration procedure is stored in memory as instructions for execution by one or more processors, preferably without user input. The one or more processors and memory may form part of an electronic controller for operating the SPM. This advantageously simplifies user operation of the scanning probe microscope.

Preferably, the one or more processors are further configured to identify a target region for positioning the measurement spot on the surface of the cantilever, and optionally adjust the position of the measurement spot based on the outcome of the calibration procedure. For example, the one or more processors are further configured to calculate the relative positions of the measurement spot and the target region, and to operate the optical assembly to adjust the position of the measurement spot on the surface of the cantilever based on the determined relative position. Advantageously, this provides an automated measurement method for locating the measurement spot in the target region.

Preferably, the cantilever motion is cantilever displacement measured by interferometric detection of the measurement spot using the photodetector assembly. Advantageously, measurement of the cantilever displacement when the measurement spot is in the target region reduces the influence of cantilever deflection due to lateral forces on the tip, thereby providing an accurate measurement of the height variation of the underlying sample surface.

Optionally, the actuator assembly may be further configured to adjust the position of the cantilever across the sample in a longitudinal direction relative to the sample, wherein a major axis of the cantilever may be offset with respect to the longitudinal direction. Preferably the longitudinal direction extends through the plane of the sample, which may be substantially horizontal. The offset is preferably an angular offset. For example, the cantilever may be tilted down towards the sample in the sample holder at an angle of 30 degrees or less, preferably 15 degrees or less, for example 11 degrees or 8 degrees. The angle of the cantilever may be estimated to be the angle of a cantilever holder configured to support the cantilever. The sample holder may also be tilted in some examples.

Optionally, the target region may be substantially aligned with the tip along the optical axis of the beam of light. When the target region is substantially aligned with the tip along the optical axis of the beam of light, the separation between the centre of the target region and the tip may be less than 5% of the distance between the base of the cantilever and the tip, preferably less than 3% of the distance between the base of the cantilever and the tip, more preferably less than 2% of the distance between the base of the cantilever and the tip. Optionally, the target region may be centred on the tip. When the measurement spot is in the target region which is substantially aligned with the tip along the optical axis of the beam of light, this advantageously provides an accurate measurement of the height of the sample during scanning.

Preferably, the target region includes a null point at which lateral and longitudinal forces on the tip do not influence the measured cantilever displacement. For example, the target region may comprise a region of the cantilever at which the deflection perpendicular to the major axis of the cantilever is substantially zero. Advantageously, this improves the accuracy of sample imaging, in particular measurements of the height variations across the sample.

The null point may be substantially aligned with the tip along the optical axis of the beam of light. However, if the major axis of the cantilever is offset with respect to the sample plane then the null point may be offset from the tip. For example, if the cantilever is tilted downwards towards the sample such that a first, free, end of the cantilever supporting the tip is closer to the sample than a second, base, end of the cantilever which is opposite the first end, then the null point is typically positioned closer to the second end.

In some examples, the target region may be offset from the tip relative to the optical axis of the beam of light. For example, top-view tips comprise a tip which protrudes beyond the end of the cantilever. In this case, it is preferable to offset the target region.

When the measurement spot is offset from the tip relative to the optical axis of the beam of light, the method may further comprise calculating a corrective factor based on the identified target region, i.e. based on the offset; measuring motion of the cantilever from light reflected from the measurement spot; and multiplying the measured motion by the corrective factor. The corrective factor may be based on the magnitude and/or the direction of the offset, for example. One or more processors may be configured to output calculated cantilever motion based on the measured cantilever motion and the calculated corrective factor, i.e. by multiplying the measured cantilever motion by the corrective factor to output the calculated cantilever motion.

The measurement spot may be offset from the tip relative to the optical axis of the beam of light because one or more of: the null point is offset from the tip relative to the optical axis of the beam of light; an offset is preferred for the cantilever type; or further calibration is not performed. In these examples, the corrective factor can be determined and used to process the measured cantilever motion. For example, when the cantilever is angled downwards towards the sample, the null point is typically towards the second, base, end of the cantilever. When the measurement spot is in this location on the surface of the cantilever, the measured displacement may overestimate the actual displacement. The actual displacement can be estimated by multiplying the measured displacement by the corrective factor.

Optionally, following the performance of one or more calibration procedures, the final position of the measurement spot on the surface of the cantilever may be stored in a memory. The position may be stored relative to a reference point such as one or more edges of the cantilever.

A second aspect of the invention provides a method for operating a scanning probe microscope. The scanning probe microscope comprises: a probe having a cantilever with a tip; a sample holder arranged to hold a sample for measurement using the tip of the cantilever; a light source arranged to emit a beam of light onto a surface of the cantilever, the beam forming a measurement spot on the surface of the cantilever; an actuator assembly configured to adjust the separation between the tip and the sample along the optical axis of the light source; an optical assembly configured to adjust the position of the measurement spot on the surface of the cantilever; a photodetector assembly for measuring light reflected from the surface of the cantilever to locate the surface of the cantilever and to measure motion of the cantilever from light reflected from the measurement spot. The method comprises executing a computer program to cause the scanning probe microscope to perform each of the following steps: (i) identifying the cantilever; (ii) retrieving a target region for a measurement spot on the surface of the cantilever from memory based on the identified cantilever, the target region having been identified by a calibration procedure; and (iii) positioning the measurement spot in the target region.

This method advantageously enables the position of the measurement spot to be determined based on the identified cantilever. This improves automation of positioning the measurement spot in the target region, i.e. a suitable location for imaging using the scanning probe microscope. In the second aspect, a calibration procedure has previously been used to identify the target region for the cantilever and therefore the measurement spot can be positioned without performing further measurements of the cantilever dynamics. This improves the efficiency of the operation of the scanning probe microscope.

The location of the surface of the"cant'lever using the photodetector assembly may be achieved in the same manners described in relation to the first aspect.

Optionally, the calibration procedure may be performed according to the first aspect. One or more of the calibration procedures described in relation to the first aspect may be used in combination.

Optionally, the scanning probe microscope may further comprise a camera for identifying the cantilever in step (i). For example, the camera may be used to identify the edges of the cantilever, or a particular shape of the cantilever, to estimate a tip location.

Optionally, step (i) may comprise identifying the cantilever using a bar code, a reference number, or a marker on the surface of the cantilever. These may be identified using the camera, for example. These identifying features may be linked to the outcome of a previously-performed calibration procedure, or may be linked to measurements provided by a manufacturer. This is an efficient manner in which to determine a target region suitable for performing an accurate measurement using the scanning probe microscope.

Optionally, step (ii) may comprise searching a look up table for an entry corresponding to the identified cantilever, and determining the target region based on the value provided in the look up table. For example, the look up table may comprise details of the target region position based on a previously-performed calibration procedure or the specific manufacturing parameters associated with the identified cantilever. This facilitates an efficient, automatable, method for positioning the measurement spot in the target region.

A third aspect of the Invention provides a computer program product comprising instructions which when executed by one or more processors of a scanning probe microscope cause the scanning probe microscope to carry out the method according to the first aspect or the second aspect.

A fourth aspect of the invention provides a scanning probe microscope comprising: a probe having a cantilever with a tip; a sample holder arranged to hold a sample for measurement using the tip of the cantilever; a light source arranged to emit a beam of light onto a surface of the cantilever, the beam forming a measurement spot on the surface of the cantilever; an actuator assembly configured to adjust the separation between the tip and a sample along the optical axis of the light source, the sample being held by the sample holder; an optical assembly configured to adjust the position of the measurement spot on the surface of the cantilever; and a photodetector assembly for measuring light reflected from the surface of the cantilever to locate the surface of the cantilever and to measure motion of the cantilever from light reflected from the measurement spot. The scanning probe microscope comprises an electronic controller configured to perform the method of the first aspect or the second aspect.

Preferably, the photodetector assembly is configured to measure motion of the cantilever by interferometric measurements. Preferably, when interferometric measurements are performed, the measured cantilever motion is cantilever displacement. Advantageously, interferometric measurements can be used to accurately measure the height variation of a sample without being influenced by cantilever deflection when the measurement spot is suitably positioned as described in relation to the first and second aspects.

### BRIEF DESCRIPTION OF DRAWINGS

FIG 1 Schematic of AFM hardware.
FIG 2 A schematic of the top side of a probe showing the positions of the detection spot and the tip.
FIG 3 E-B model
FIG 4 Position dependence of detection sensitivity driven by tip piezoresponse.
FIG 5 Tune parameterization
FIG 6 General flowchart for an iterative approach to spot positioning
FIG 7 Positioning the detection spot and the tip over a fiducial.
FIG 8 Longitudinal modulation method.
FIG 9 In-situ imaging of the tip location with a reflective sample
FIG 10 In-situ side-view imaging of the cantilever and tip using a mirror
FIG 11 Plan fiducial markers with corrections
FIG 12 Offset measurement point for top-view cantilevers
FIG 13 Force curve method and tilted correction factors
FIG 14 Touchup corrections for inclined cantilevers

### DETAILED DESCRIPTION OF THE INVENTION

For modes of operation for which measuring the forces acting on the tip of a nanoscale probe is of interest, it is preferred to use interferometric detection (IDS) due to its improved noise floor and accuracy. In AFM, since interferometric detection is a direct measure of displacement rather than an indirect measure of cantilever angle which serves as a proxy for displacement, interferometric detection can be insensitive to effects that tend to tilt the cantilever without changing the displacement of the sample or tip. One preferred embodiment of the IDS measurement has the spot placed directly over the tip in order to simplify and improve the accuracy of the measurement. For example, when the IDS spot is positioned above the tip, the effect of artifacts caused by friction, long range body electrostatic forces and cantilever dynamics and all minimized, allowing unambiguous measurements of the vertical displacement of the tip.

In modes in which the tip is maintained in contact with the surface while the probe is actuated or modulated, it is preferred to locate the spot position where the frequency response is flat at the contact resonance frequency, as described in prior art (Labuda & Proksch, 2016). This detection spot position minimizes the effect of cantilever dynamics on the output signal. However, locating this spot is burdensome and takes a long time if the user is forced to perform it manually. We improve on this discovery by developing an automated means of identifying this location using a new optimization technique.

In the present invention and related patents, although either optical beam deflection or interferometric displacement sensing may be used in most operating modes, in general the preferred embodiment for measuring cantilever deflection is using interferometric displacement sensing. This distinction differentiates the present patent from prior art, which specifically describes the interferometric signal as a form of Z height data which is more commonly achieved using a separate sensor in conventional scanning probe microscopy. Furthermore, while the methods described in prior art are limited solely to identifying the tip location and placing the detection spot to coincide with the tip location, in the present invention methods are also described for positioning the spot at locations other than directly over the tip. This capability is useful for probe designs in which the tip extends beyond the end of the flat cantilever body, such that the detection spot cannot be placed directly over the tip and is also useful for certain operating modes such as contact resonance modes in which specific benefits main be gained by positioning the spot at a location other than the tip.

FIG4 shows tunes made with the IDS spot at different positions on the back of a cantilever that is parallel to the sample surface. A preferred embodiment of automated spot positioning is to actuate the cantilever using piezoelectric actuation as is performed in piezoelectric force microscopy (PFM), in which an oscillating voltage applied to a conductive cantilever and probe tip causes the sample to deform. However, any means of actuation known to those skilled in the art may suffice. The cantilever is driven at or near one or more contact resonance frequencies, either individually or simultaneously. The cantilever may be driven by an electric potential to the probe, which actuates a piezoelectric sample which in turn actuates the cantilever. Alternatively, the sample may be driven by an externally applied voltage; or the cantilever or sample may be driven by a separate actuator which is mechanically connected; or the cantilever may be actuated photothermally or magnetically; or the cantilever may oscillate due to Brownian motion; or any other actuation method known to those skilled in the art may be applied. The amplitude and phase of the displacement of the cantilever are measured using either interferometry or optical beam deflection, as a function of drive frequency.

One example if the cantilever is actuated at a range of frequencies to produce amplitude versus frequency tunes as shown in FIG 4. Note that the amplitude (vertical axis) is logarithmic in this plot. The IDS will measure different displacement versus frequency functions when the detection spot is placed at different positions as shown in FIG 4; when *x*/*L* = 0.95 4010, *x*/*L* = 1.00 4020 and *x*/*L* = 1.05 4030 for example. When the spot is positioned at *x*/*L* = 1.00, over the tip, the cantilever dynamics are suppressed, and the amplitude is substantially independent of the drive frequency. When the range of frequencies encompasses the contact resonance and the spot 1010 is not directly above the tip 1020, then in general an anti-resonance 4015 and resonance peak 4017 will appear. When *x*/*L* < 1.00, the ant-resonance 4015 appears above the resonance frequency 4017. Similarly, when *x*/*L* > 1.00, the relationship reverses, where the antiresonance 4035 appear below the resonance 4037. In an embodiment of the present invention, this relationship is used to automatically position the spot.

The frequencies at which these occur, their magnitudes relative to zero or the baseline 5010, the integral of any function of the curve shape, or any other parameter extracted from this curve and/or its phase may be used to indicate the point at which the resonance and the antiresonance overlap and cancel each other. It is preferred that the parameter or parameters chosen to quantify the tune vary linearly with the spot position and are zero at the intended spot position, and that the parameters are repeatable for many probe types and samples. These properties allow for an algorithmic determination of the where to move the spot position based on a measurement. The inventors have found that the slope 5022 between the resonance and the antiresonance is particularly robust and repeatable, but any parameter may be used, as well as any method for finding a root or local extreme value in the function of parameter versus position.

Interpretation of results in the present invention is greatly simplified in the limit of a stiff tip-sample contact, *k_{cantilever}* « *kₜᵢₚ₋ₛₐₘₚₗₑ.* The stiffnesses of the tip, sample, and contact between the tip and sample all contribute to alter the constraint on the tip motion owing to its being in contact with the surface. This effect shifts the detection spot position at which the resonance and the antiresonance cancel and produce a flat amplitude response. Therefore, it may be necessary to apply a correction to the spot position or to the measured sensitivity to account for compliance in the tip and sample, especially as the tip-sample stiffness approaches the value of the cantilever stiffness.

In certain modes of operation, multiple driving forces actuate the cantilever. These driving forces may include piezoelectric actuation of the sample or an actuator in any direction, electrostatic forces, friction on the surface, photothermal actuation, or any other driving force known to those skilled in the art. These driving forces may be intentional forces producing a response that the operator intends to measure or may be extraneous effects that are unwanted and which the operator may desire to mitigate. Each mode of actuation has its own transfer function and optimum detection spot position which reflects the amplitude and phase of the cantilever motion as a function of the drive frequency of actuation and the drive amplitude. When multiple modes of actuation are simultaneously present, they may combine in phase for some frequency ranges and combine out of phase for other frequency ranges, causing one or more local minima called antiresonances and one or more local maxima called resonances. Of particular importance is when these resonances and antiresonances converge to cancel out and produce a flat frequency response near the contact frequency. This may occur only for certain positions of the detection spot and the location at which this occurs is often of interest, whether the detection method makes use of the optical lever principle, interferometric detection, or other detection methods known to those skilled in the art.

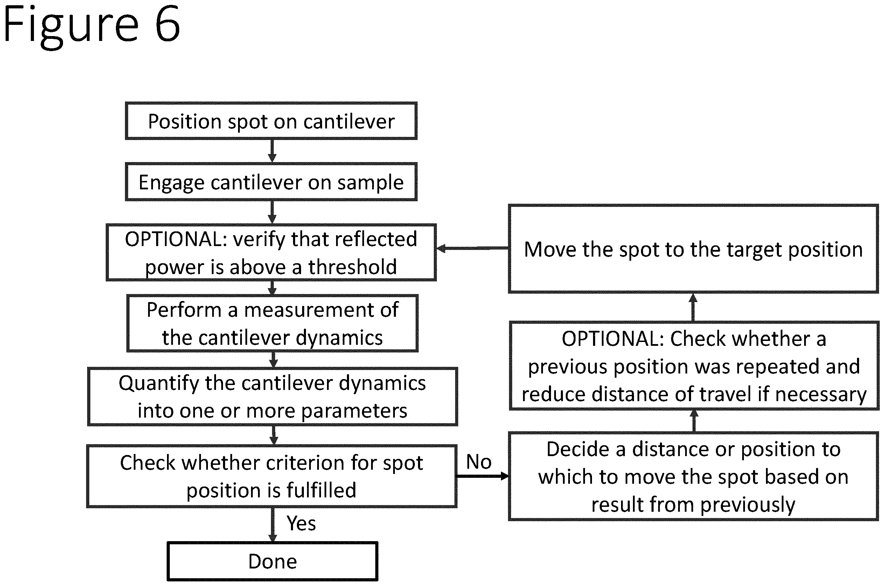

One technique for calibrating the sensitivity of the AFM to the cantilever response is to position the detection spot at a location where the sensitivity can be determined. When the detection spot 1010 is to be positioned at a particular location, it may be advantageous to reposition the spot. In some cases, this may be accomplished by directly observing both the position of the detection spot and the tip and moving the spot to the tip in a single motion. In other cases, it may be necessary to move the spot iteratively, moving the spot to new target positions multiple times if the precise offset cannot be determined at the outset, as described in the flowchart of Figure 6. In this case, some criteria must be established to determine where to move the detection spot and when to end the iteration. Conversely, for certain experiments and certain models of probe, it may be desirable to calculate the sensitivity for a desired position of the detection spot without moving the detection spot to the tip. In this case, it may be necessary to compute the sensitivity based on quantities that can be measured at a single location of the detection spot or by extrapolating from quantities that can be measured at two or more detection spot locations that are not over the tip, as described in the flow chart in FIG 6.

One or more parameters are calculated to quantify the magnitudes or the frequencies at which resonances or antiresonances occur in the functions of amplitude or phase versus frequency. These parameters may include the frequency, amplitude, or phase of a resonance 4017, 4037 or an antiresonance 4015, 4035, the slope 5020 between the resonance and the antiresonance, or the height of the baseline response 5010 which occurs when the drive frequency is not near the contact resonance. For example, the slope connecting the resonance and antiresonance of the first eigenmode is found to be monotonically decreasing as a function of spot position; such that the X intercept of the slope function corresponds to the location where the spot 1010 is directly over the tip 1020. The parameters which are calculated could also relate the shapes, frequencies, or amplitudes of resonances or anti resonances to other antiresonances, and may involve searching for local extreme values, integration, convolution, or other methods known to those skilled in the art. Based on the values of the parameters, the method decides a direction and distance to move the spot. This decision may be based on scaling a single parameter by a gain factor, a calculation involving several parameters, a measure of central tendency such as the mean or median, or other methods known to those skilled in the art. The direction and distance of motion may also be based on the history of these calculated parameters; for example, the Newton-Raphson method, secant method, or another root-finding method could be used after performing the analysis at multiple spot locations. The history of locations or distances travelled at each step may also be used to determine whether the method is overshooting or falling short of the desired location, in which case the sensitivity of the direction and distance to travel are modified. For example, if the calculation causes the spot to be moved from one location to another and then return to its previous position, the method may instead direct that the spot be moved to a point in between the two previous positions. Once a distance to move has been determined, the detection spot is moved to the location. The procedure described above may be repeated to iterate until a suitable location has been found. The decision to stop repeating the procedure may be taken when some threshold or criterion has been achieved. Alternatively, the method may assume that a suitable location has been achieved after a single iteration or after a set number of iterations. In practice we find that a sufficient criterion is to determine that the intended motion of the spot is below some threshold. The method described here may be performed with interferometric sensing to identify the tip, or with optical beam detection to identify the location at which the beam tilt is insensitive to one or more cantilever dynamics, such as electrostatic effects. At this location, optical beam deflection is optimized to ignore these effects, and interferometric sensing with the same spot position is optimized to maximize contrast and observe the contact resonance. This preferred embodiment is particularly useful for piezoelectric force microscopy or PFM, in which the probe may be actuated by applying an electrical bias, which creates an electric field in the sample and in turn causes the sample to move vertically, thus actuating the probe.

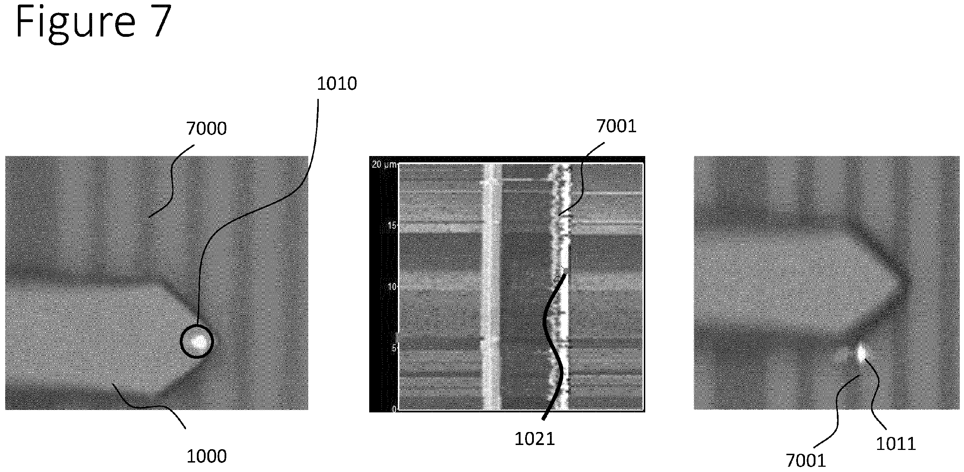

Another embodiment for positioning the optical detection spot is described in FIG 7. In this embodiment, the tip position is located by scanning over a feature or fiducial on the surface which may be observed using an optical microscope attached to the AFM and also recognized in a topography scan of the surface, as shown in Figure 7. In this method, the probe 1000 is first moved to the fiducial 7000. Alternatively, such a fiducial may be intentionally created, for example by scanning the probe with a large, applied load in order to scratch the surface, using electric current to oxidize the sample, or using a separate means of creating the fiducial such as a blade used to scratch the sample, or a sharp point used to create a prick in the sample. For the purposes of positioning the spot along the length of the probe 1000, it is convenient for the fiducial 7000 to be perpendicular to the longitudinal axis of the probe. Conversely, for the purposes of positioning the spot across the width of the probe, it is convenient for the fiducial to be parallel to the longitudinal axis of the probe. The spot 1010 is placed at an arbitrary position near the end of the cantilever 1000 at this stage and an image of the topography of the surface is then produced using tapping mode, contact mode, or any other imaging mode known to those skilled in the art. The fiducial 7001 is identified in the image manually using a user interface or automatically using feature-finding techniques such as edge detection, image correlation, or any other technique known to those skilled in the art. The probe is moved to that location using the positioning actuators on the AFM, such that the tip 1020 is directly over the fiducial 7001. Next, the spot 1011, probe, or field of view is moved to the side so that the spot may be positioned at a known position relative to the fiducial 7000. Alternatively, the probe may be raised so that it is out of focus. If the light beam is perpendicular to the tip, and if it is desired to place the spot directly over the tip, then the light beam should be positioned so that it is bisected by the fiducial as shown. Alternatively, the spot may be aligned with the fiducial without moving the spot, probe, or field of view by interpolating or extrapolating the position of the fiducial below the probe based on the portion of the fiducial that is visible. In this case, geometric system- and probe-specific corrections to the spot position may be applied to correct for the tilt of the spot and cantilever. This preferred embodiment is particularly useful for operating modes in which the mechanical properties of the surface, for example the stiffness and viscoelasticity, are of interest.

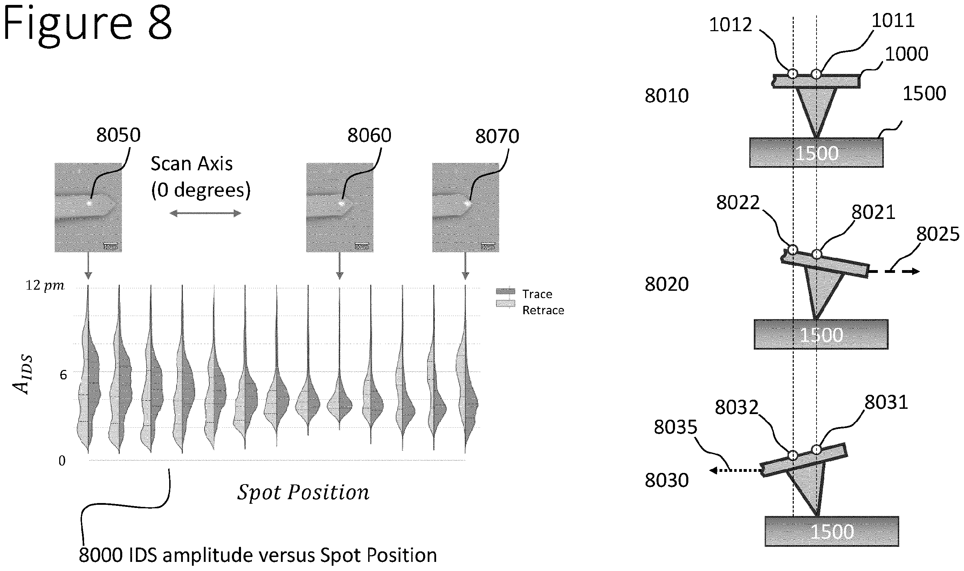

Other methods may be used for determining the position of the tip or the direction in which the detection spot must be moved, in addition to the methods described above. Another method for finding the optimum spot location involves actuating the base or tip of the cantilever in one or more directions relative to the sample, as shown in Figure 8. An actuator moves the probe relative to the sample while the tip is in contact with the surface. In this case, the sample scanner is used to cause the relative motion; alternatively, photothermal actuation or another actuation method known to those skilled in the art may be used to cause the probe to deflect while the tip is in contact with the surface. While the cantilever is actuated, the tip tilts from side to side and the displacement of the cantilever is measured using the detector, as shown in Figure 8. In this Figure, a series of measurements of the interferometer amplitude was measured at 13 distinct spot positions, each separated by ≈ 3*µm* 8000. Only three are pictured for brevity, one with the spot close to the base of the cantilever (x/L < 1) 8050, one with the spot past the tip (x/L > 1) 8070 and one with the spot very close to the tip (*x*/*L* ≈ 1) 8060. Violin histograms of the measured amplitudes are plotted in 8000 for each spot position. It is apparent that the variation in the measured amplitudes is minimized when the spot is positioned over the tip 8020. This provides a clear method for locating the tip. Since the motion in this example was substantially along the axis of the cantilever, it determined the tip position on the longitudinal axis. To determine the tip position in the lateral axis, it may be advantageous to scan along that axis while performing a similar data analysis. As is clear to one skilled in the art, these scans can be combined in many different ways to efficiently locate the tip coordinates, for example a circular scan or a cross-shaped scan with appropriate analysis.

These results are schematically explained in panels 8010, 8020 and 8030. In 8010, a cantilever 1000 is oriented parallel with the sample plane and in stationary contact with the sample 1500. The displacement measurement immediately above the tip 1011 will substantially match the displacement measured off to the side of the tip location 1012. In the case 8020 where the tip is moving to the right relative to the sample 8025, tip-sample friction exerts a torque on the cantilever, causing it to tilt. In this case, the two measurement positions are no longer equivalent. To first order, the displacement measurement 8021 is equivalent to the non-moving case 1011. However, the off-center measured displacement 8022 is substantially larger than the non-moving case 1012. Similarly, 8030 when the tip moves to the left 8035 relative to the sample, the centered displacement measurement 8031 is substantially the same as the other centered measurements 1011 and 8021. The offset measurement 8032 is now smaller than the centered measurement 8031. It is apparent that by measuring these scan-dependent quantities, the position where the variation is smallest should substantially correspond to the position where the spot is centered above the tip.

Note that this and the other methods discussed here can be performed either before or after other measurements. It may be preferable in some cases to perform the tip location measurement *after* other measurements if the method may affect the tip quality for example.

The relationships of the frequencies and spring constants of various eigenmodes may be compared with known relationships that have been established in prior art. Here, we claim the use of this known relationship to establish the position of the spot over the tip when using interferometric detection, because when the spot is at the position of the tip the sensitivity to all modes are the same. In this method, a thermal tune is performed with the spot located at some position on the cantilever. Thes shape of the power spectral density near two or more eigenmodes are identified. Alternatively, a driven tune may be performed with the cantilever not in contact with the surface to identify the eigenmodes. Any actuation mode may be used to perform a driven tune, but photothermal actuation may be preferred because it does not invoke other mechanical resonances separate from the cantilever resonances, as methods such as piezoelectric actuation may. Once the frequencies of the eigenmodes have been identified, if a thermal has not yet been performed, then a peak fit is applied to each of two or more eigenmodes in the thermal noise frequency spectrum. The frequency and spring constant for each mode are identified and compared with prior known relationships, must also be equal for all modes when the detection spot is over the tip. Therefore, the ratio of this parameter calculated for multiple eigenmodes may be used as an indicator of whether the detector spot is positioned above the tip.

Correlation of optical images of the detection spot and/or cantilever may also be used to establish the detection spot position or correction factor. An image of the probe is captured using the optical camera provided with the instrument. This image is correlated with a reference image to identify the location of the cantilever, using cross-correlation, Fourier analysis, edge finding, or any other technique known to those skilled in the art. The position of the detection spot on the image may be established in advance for the system or may also be determined using image correlation at the time the method is executed. For example, the brightest pixel in the image may be selected and taken to be the center point of the spot. Alternatively, two images may be captured, one with the light source on and one with the light source off. The maximum value of the difference between these two images may be taken to be the position of the spot. Other methods such as Gaussian fitting, image recognition techniques including this included in OpenCV, and other methods well known in the art may also be employed. Once the locations of the probe and detection spot have been established, the spot or probe may be moved so that the spot position on the probe corresponds to a known location at which the detection sensitivity is predetermined. This process may be iterated multiple times to ensure that the intended position has been reached. Alternatively, for a given position of the spot, the detection sensitivity may be calculated according to beam theory or a known relationship that may be specific to the design of the probe and the design of the microscope, in lieu of moving the spot to a predetermined location. For cantilevers in which the tip is set back from the end of the cantilever and for interferometric detection systems, it is preferred to use the method where the spot 1010 is offset to a specific location; specifically, to be directly above the tip 1020 such that the sensitivity of the interferometric detection system is equal to the detection sensitivity of the probe. For probes which have already been used for data collection, or where contamination, probe design, or modifications prevent positioning the spot at the predetermined location, it may be preferred to calculate the sensitivity based on beam theory or a model or functional form which has been determined to be valid for the model of cantilever.

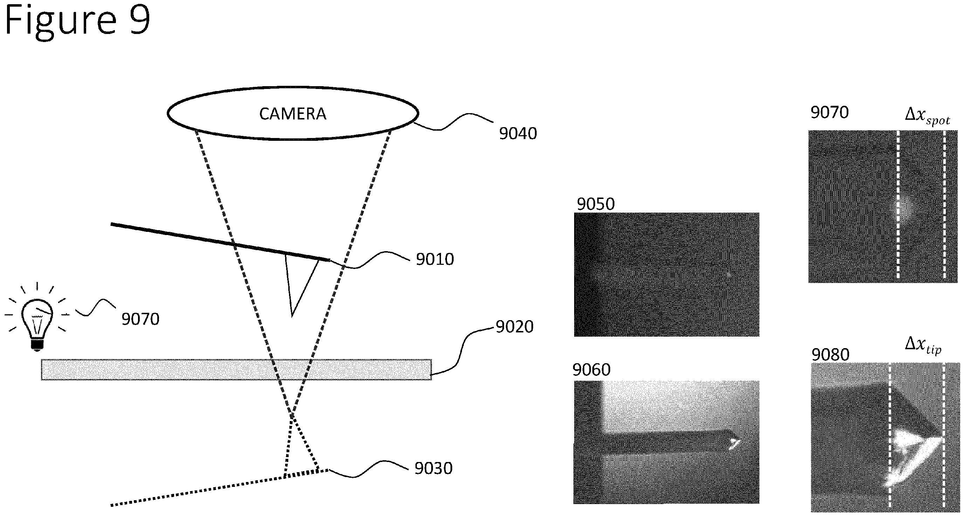

The location of the probe tip may be directly measured using optical microscopy. This measurement can then be used to position the IDS or OBD spot. Several configurations for measuring the position of the tip are shown in Figure 9.

Figure 9000 depicts a scenario where the underside of the AFM cantilever 9010 can be imaged in situ with the optical microscope that is normally included in an AFM system. By using a reflective sample, a mirror image of the cantilever is formed below the sample. The sample 9020 may be a mirror surface specifically selected for this application, or maybe the AFM sample itself if it is substantially reflective to produce a mirror image of the cantilever 9030. The camera optics 9040 are then moved to focus onto the mirror image of the cantilever 9030. This produces the underside image 9060, from which the tip location with respect to fiducials can be measured, an example of which is shown in the zoom-in image 9080. A light source 9070 may be positioned appropriately to create contrast that allows for more accurate determination of the tip position from the image 9060.

Repositioning the camera focus back onto the AFM cantilever 9010 provides the top-view view of the cantilever 9050, which allows the measurement of the spot location as shown in 9080. Now, the spot may be relocated to position it above the tip, or some position with respect to the tip, by using fiducials that are identifiable in both the top-view and underside images of the cantilever.

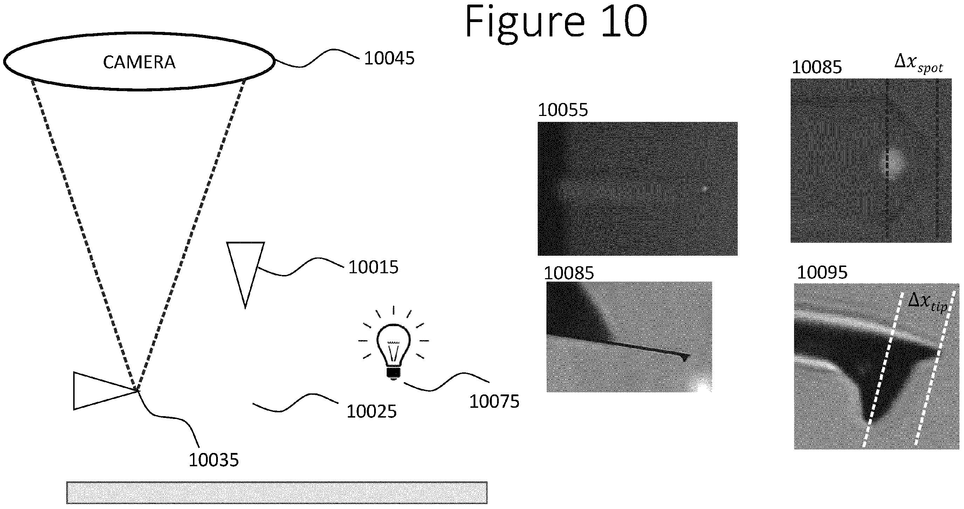

Alternatively, the probe may be imaged using a side-view camera or using a side-view mirror attached in place of or near the sample or attached to the tip holder. Figure 10 depicts a scenario where a mirror 10025 is placed on or near the sample, and near the AFM cantilever 10015. The angle of the mirror was chosen to create a side view mirror image of the AFM cantilever 10035 from the point of view of the camera. The camera optics 10045 are then moved to focus onto the mirror image of the cantilever 10035. This produces a side-view image 10085, from which the tip location with respect to fiducials can be measured, an example of which is shown in the zoom-in image 10095. A light source 10075 may be positioned appropriately to create contrast that allows for more accurate determination of the tip position from the side-view image 10085. This light source 10075 may be incorporated into the sample that holds the mirror 10025. Alternatively, for a mirror that is built into the cantilever holder, the light source may be built into the cantilever holder in a position and orientation that optimizes the contrast of the side-view image 10085. After moving the camera view back to the AFM cantilever 10015, the top-view image 10055 can be used to relocate the spot to position above the tip by using fiducials that are identifiable in both the top-view and side-view images of the cantilever

Another option is to image the position of the tip with a separate camera provided for the purpose prior to installation in the AFM, to measure the tip position. After the position of the tip has been identified, the detection spot may be positioned directly over where the tip was previously determined to be. Alternatively, with knowledge of the tip location, the detection spot may be positioned at any location where the sensitivity may be calculated using beam theory or another model for the cantilever geometry.

The optimum detection spot location or direction in which the detection spot should be moved may be determined by quantifying some aspect of the response of the cantilever and comparing it to an expected value. In the method, any of various AFM tests or operating modes may be performed; for example, the sensitivity of a force spectroscopy measurement may be gathered on a stiff substrate and the slope of the resulting force curve taken. On a soft substrate, a force curve may be taken and the cantilever sensitivity may be used as a fitting parameter in a mathematical expression describing a model for the contact between the probe tip and a soft material. Alternatively, a thermal tune may be performed, or a driven tune may be performed, or any other measurement which correlates with the sensitivity of the system. The value extracted from the measurement is compared with a known, ideal value for the system. The method then decides where to move the spot based on the difference between the measured value and the known, theoretical value. For example, if the measured value of the deflection sensitivity taken from a force spectroscopy measurement is greater than the expected theoretical value, then the spot would be moved toward the end of the cantilever; if the sensitivity is too low, then the spot would be moved toward the chip. This decision may be made based on known properties of the cantilever.

If the detection spot is to be moved to a target location, some method is employed to decide where the spot is to be moved to next. If the positional offset between the tip 1020 and the detection spot 1010 is known, and the intended detection spot position is directly over the tip, the detection spot is moved directly to the tip. If the method which has been employed for quantifying the position of the tip does not directly calculate the distant by which the spot must be offset, then a decision regarding the offset must be made using a more complex algorithm based on the parameter or parameters that were previously calculated, which may possibly involve iteratively performing calibrations. One means to determine the distance by which the detection spot must move relative to the tip is to scale the value of the parameter by some gain to produce a distance. This gain may possibly be changed depending on the history of locations at which measurements are taken. For example, if on the initial step the method determines that the spot should be moved in one direction, and on some subsequent step the method determines that the spot should be moved in the opposite direction, it may deduce that the detection spot is overshooting the target location and may reduce the gain. Alternatively, a function may be implemented to reflect the expected variation of the parameter at various locations on the probe, for example using beam theory or a linear fit. In an alternative form, multiple parameters may be calculated and some function of their values such as a linear combination of all parameters or a measure of their central tendency may be calculated, and the resulting parameter may be used to determine where the detection spot is to be moved. Another means of determining the position to which the spot should move is to apply any variation of a proportional-integral-derivative controller to the values of the parameter calculated at various positions, so that the detection spot position may move faster or slower to achieve its target more efficiently. The ideal detection spot may also be identified using a root finding algorithm such as the secant method, in which the value of the parameter is determined at two different locations and extrapolated or interpolated to the target value of that parameter. The detection spot may then be moved to the new location and the process may be repeated. Another means to decide the next location to which the detection spot should be moved is to move the detection spot by a prescribed increment at every step and to use the value of the parameter only to decide whether the target position has been achieved, at which point the process is completed. Finally, any combination of the above methods may be used together.

After a decision is made regarding where the spot should be moved, the spot is moved to the target location. The steps described previously may possibly be repeated to position the detection spot more precisely via an iterative approach. At the new spot location, it may be desired to confirm that the detection light beam is still illuminating the detector; this is commonly performed as a safety check in AFM during procedures involving motor moves. Some criterion or criteria may also be checked at this stage; for example, the method may check some criterion describing whether the target spot position has been achieved. In practice, an effective criterion is that the next intended motion of the detection spot is less than some distance threshold.

Alternatively, rather than moving the detection spot, the value or values of the parameters determined previously may be used to calculate the sensitivity using beam theory or some other suitable model, given information about where the spot is located. This latter approach to choose a sensitivity based on the values of the parameters excludes force spectroscopy measurements, which are established as prior art. Choosing a sensitivity value for a given spot position in lieu of moving the spot to a target location is particularly useful for interferometric detection and probes for which the tip 1020 is located at the end of the probe, such that the spot cannot be positioned directly over the tip.

In addition to being used to calibrate the normal sensitivity, the methods described previously may be applied for positioning the detection spot and calibrating the lateral sensitivity. For example, the detection spot may be positioned laterally over the tip or at an offset to one side of the tip based on the information previously obtained. This information may be used in tandem with prior art to determine the torsional stiffness of the cantilever, for example by measuring the thermal spectrum at multiple positions across the width of the lever. With a suitable method for measuring the tip height, such as the optical microscope method described in Figures 9 and 10 or the longitudinal modulation approach described in Figure 8, the lateral sensitivity may be calibrated.

A method for automatically calibrating the lateral and/or normal sensitivity of a cantilever using interferometric sensing or any other method known to those skilled in the art. The spot is placed at some position on the cantilever, which may be offset from the centerline. A thermal tune is performed and the mean squared amplitude of the response around the resonance frequencies of one or more eigenmodes is calculated. This process is repeated at one or more additional locations at known distances from the initial point, which may be shifted in either or both of the longitudinal or horizontal axes of the cantilever. If the torsional stiffness is to be calibrated, the torsional stiffness is calculated in terms of the mean squared amplitudes and the spacing between the points, as described in prior art. If normal sensitivity or stiffness is to be calibrated, the stiffness or sensitivity may be extrapolated linearly or using the principles of beam theory to any location along the cantilever, in particular the location of the tip. In order to complete the torsional stiffness calibration, the height of the tip may be measured using a side-view camera, or an angled side-view attached in place of or near the sample, or attached to the tip holder, which allows the cantilever to be viewed in the camera provided with the microscope. Alternatively, the tip height may be measured using a custom fixture to allow the tip to be viewed from the side with a separate camera provided for the purpose. Alternatively, the height of the cantilever may be determined by moving the probe and/or sample relative to each other, such that the tip tilts from side to side. The rocking of the cantilever may occur at multiple frequencies, amplitudes, or setpoints to identify and account for the impact of sliding. The angle of displacement of the cantilever may then directly be related to the lateral distance that the tip has moved. This method has the ability to correct for tip compliance which is not generally possible using optical methods, making it a preferred embodiment. The height of the tip may also be determined by focusing the camera optics separately on the cantilever and on the sample and using the height difference between the two as the height of the tip. The height of the tip may also be determined by observing the position of the interferometric spot on the back of the cantilever and where it falls on the sample when the spot or cantilever is moved out of the way and correcting by the sine of the angle of tilt of the probe. The height of the tip may also be determined using the interferometric detector itself on the backside of the tip and also directly on the surface.

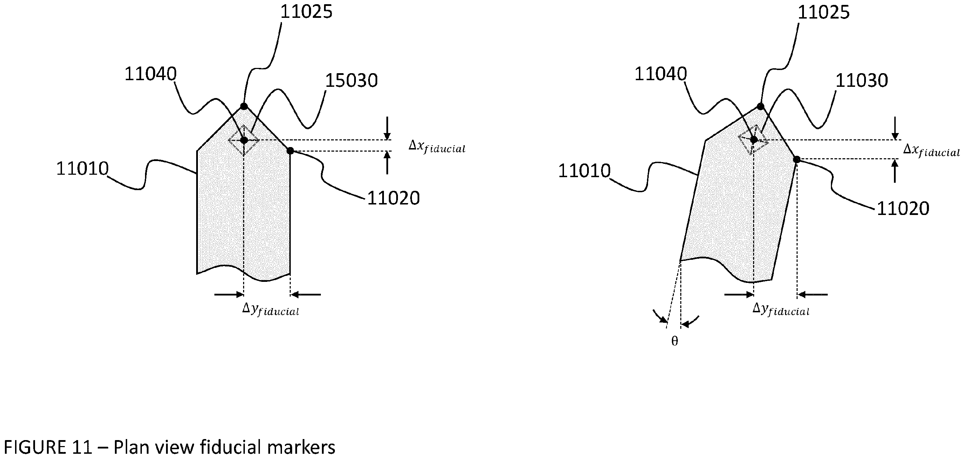

Figure 11 shows another method for automatically locating the preferred spot position using an optical view of the cantilever. Microfabricated cantilevers can often have very reproducible dimensions. This allows a spot positioning method where canonical tip-position coordinates, relative to a fiducial visible on the top surface of a cantilever can be implemented. These parameters can be characterized ahead of time using any of the methods discussed above or other methods, including factory calibration of the relative position of the fiducial and the cantilever tip. For example, on the top view ("plan view") of a cantilever 11010, a preferred fiducial 11020 location can be defined. This preferred fiducial 11020 has a spatial offset between its location and the location of the tip 11030 apex 11040 (or the preferred spot location), Δ*x_{fiducial}*, Δ*y_{fiducial}*. "Best guess" values of these offsets Δ*x_{fiducial}*, Δ*y_{fiducial}* can be stored as a parameter for a single cantilever or for a family of similar cantilevers that would allow rapid and accurate spot positioning based on a simple video image or other means of identifying the fiducial position.

If the cantilever is rotated in the field of view, it will be necessary to recalculate the position adjustments Δ*x_{fiducial}*, Δ*y_{fiducial}* to account for the rotation angle θ. In one embodiment, a second fiducial 15025 could be used to correct for rotation using standard rotation transforms that are well-known in the art. Another preferred embodiment is to have a fiducial directly above the tip position 11040. A fiducial above the tip, in large part obviates the need for correcting cantilever rotations.

This fiducial method can also be used as a starting point for further positioning refinement, using one or more of the methods discussed above. An optimized starting position has the advantage of requiring fewer refinement steps in the case where further adjustment of the spot position is desired or necessary. As an example, it may be advantageous to use a fiducial method to position the spot close to the tip location and then fine tune that tip location using other methods, as outlined above.

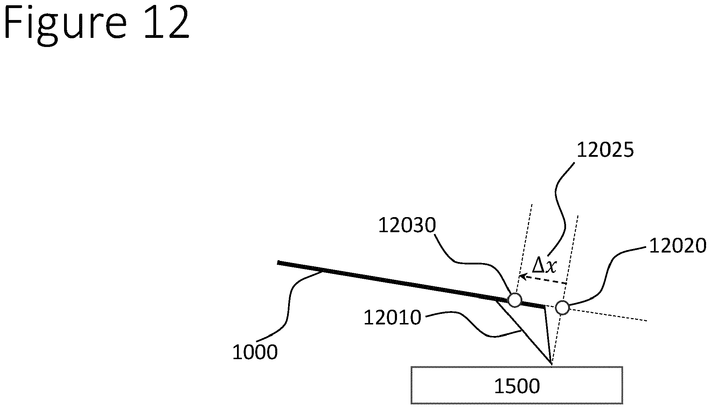

As is well known in the art, some cantilevers 1000 have a "tip view" characteristic where the location of the tip is visible from above 12100, allowing a clear optical view of the tip that may be advantageous for positioning the tip on the sample surface with high positional accuracy (see Figure 12). In this case, another embodiment of the invention is required. It is difficult or even impossible to place the spot position immediately above the tip 12020 and still reflect sufficient light back into the interferometer to measure the tip motion. In this case, the spot position can be positioned at a known distance away from the tip, Δx 12025 such that the interferometer operation is sufficiently optimized to make a vertical positional measurement. The tip motion, as inferred from this offset tip position requires the introduction of a correction factor that enables better estimation of the tip motion from the displacement measured at position 12030, as if it were being measured directly above the tip 12020.

When the detection spot cannot be positioned at the desired location, for example when the tip is near or beyond the end of the probe cantilever (see Figure 12), other methods may be employed to extrapolate the sensitivity at a detection spot position which can be reached. Any of the measurements described previously from which a parameter may be extracted may be employed. The value of the parameter from a single measurement may be converted into a sensitivity following a relationship which is determined a priori or based on a suitable model. Alternatively, multiple measurements may performed with the detection spot positioned at two or more locations along the length of the cantilever, and the values of the calculated parameters may be extrapolated to the end of the lever using a linear fit or another functional form which is suitable for the parameter.

In one embodiment of the invention for measuring vertical tip motion with precision, the vertical motion of the cantilever w(x) is measured at two different locations near the cantilever end. This amplitude of motion may be the thermal noise of the cantilever, or the driven amplitude of motion by some actuation mechanism, such as a piezo or photothermal excitation. The slope of the end of the cantilever can be computed from the known locations (x1, x2) and measured amplitude (A1, A2), by m = (A2-A1)/(x2-x1). With this slope measurement, the displacement at some other point on the cantilever x3 can be inferred by assuming a constant slope in the vicinity of the two measured locations. For example, the amplitude at the end of the cantilever can be calculated, despite not being able to position the light spot exactly at the cantilever end.

The procedure discussed above can be repeated at different frequencies to extract the slope of the "DC displacement" *m*(*freq* ≈ 0), or the slope of the cantilever at any non-zero frequency, *m*(*freq* ≠ 0).

Instead of using an experimental method, it may also be desirable to use a mathematical model to estimate the slope as a function of position. Examples include finite-element simulations, and various analytical solutions to the beam equation, including the Euler-Bernoulli beam equation. These models can be used to develop linear and/or non-linear corrections that correct measurements made at the accessible spot on the cantilever back 12030 to the actual motion of the tip as if the measurement were made directly above it 12020. These models may include frequency-dependences as well. For example, the correction for low-frequency, sub-resonant motion will usually be different than the correction at resonance if the cantilever mode shapes at those two frequencies are different. Thes mode shape dependent correction may also include corrections for other effects, such as cantilever damping by a viscous environment, electrostatic interactions between the sample and the body of the cantilever and other interactions known in the art.

As is apparent to those skilled in the art, it is preferable to minimize Δx 12025 so that crosstalk from other tip motion, such as in-plane motion or longer-ranged forces, such as electrostatic forces acting between the cantilever body and the sample contribute as little as possible to the vertical measurement. This will typically allow better and more simple approximation for any correction factors or may obviate the need for a correction factor entirely if Δ*x* 12025 is small enough and if the experimental requirements are not too demanding.

Another embodiment of the invention, making use of force-distance measurements common in the art, is described in Figure 13. The graph in 13000 shows a family of IDS displacement versus relative cantilever-sample distance curves. The family of curves was made at different spot positions, similar to the arrangement in Figure 8, where, at one extreme, the spot is positioned close to the base of the cantilever 8050 and at the other, past the tip 8070. The dashed lines represent the approach curves, while the solid lines represent the retract curves. Note that the approach curves are larger than the retract when the spot is between the tip and the base of the cantilever *x*/*L <* 1. Similarly, the retract curves are larger than the retract when the spot is positioned beyond the tip, *x*/*L >* 1. When the spot is located substantially over the tip, 8060 *x*/*L* ≈ 1, the approach and retract curves substantially overlap. Thus, minimizing the difference between approach and retract curves is another test that can be used to automatically position the spot over the tip.

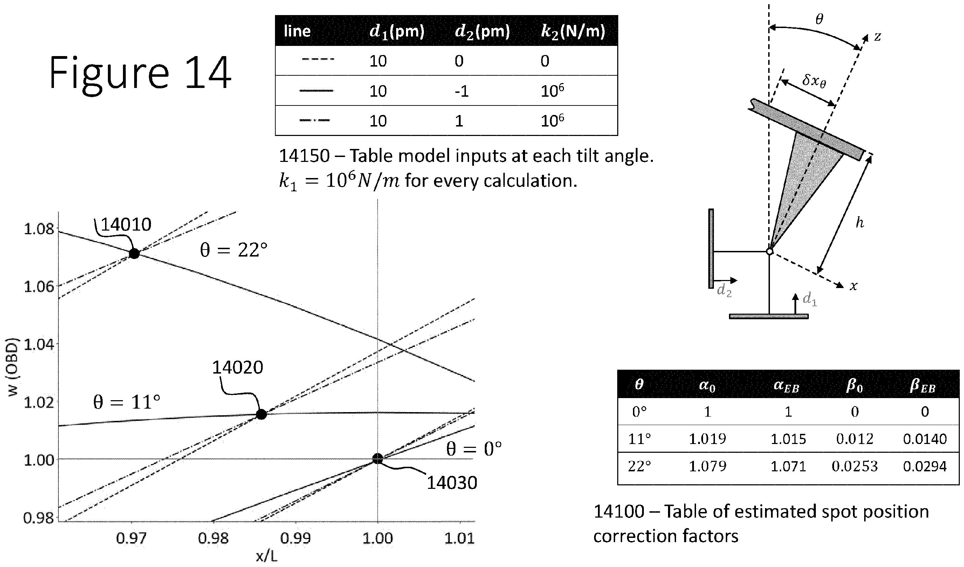

Cantilevers in existing AFMs usually fix the cantilever at an angle *θ* relative to the sample plane. This tilting effectively rotates the natural reference from of the cantilever x, z, with respect to the reference from of the sample d1, d2 (see Figures 3 and 14 for example). This rotation effectively mixes tip-motion components (d1, d2) into each of the cantilever components, even when the spot is positioned above the tip. A simple analysis reveals that the measured vertical displacement *δz*, can be related to the actual vertical motion *d*₁ by *d*₁ = *δz* · *cosθ* = *δz*/*a*₀*.* Furthermore, the spot position null point also moves when the cantilever is tilted with respect to the sample. While for small angles, this movement will be negligible, for larger tilt angles it will become more significant. A simple, first order approximation of the new null point *δx_{θ}* can be estimated with another simple geometric construction illustrated in Figure 14. In this case, *δx_{θ}* = *h* · *tanθ* = *hβ*₀. Some examples of these estimated parameters are shown in the Table 14100.

More accurate corrections can be made as well. In another embodiment, the null points for a variety of tilt angles 14010, 14020 and 14030 are estimated by calculating the theoretical response of an Euler Bernoulli beam subjected to out of place (d1) and in-plane (d2) forces (see Figure 3). The crossing points of the displacement curves at a particular tilt angle can be used to identify the null points, where the effects of the in-plane forces are substantially ignored. Values using this method are also listed in Table 14100. At each tilt angle in Figure 14, three sets of values were used as shown in Table 14150.

In some cases, it may be desirable to increase the scanning speed of the probe over the surface. In those cases, this invention will be useful for non-standard scanning paths because of the immunity to varying in-plane forces. Examples include circular, spiral, Lissajous and other scanning paths that minimize the high-frequency performance requirements of the relative tip-sample positioning system. For example, by positioning the interferometer spot substantially above the tip, crosstalk to the varying in-plane forces due to the varying frictional and other forces will be minimized, yielding a higher fidelity measurement of the surface topography. In those cases where tip-sample feedback is implemented, it will also improve the performance of the feedback loop since the displacement sample will have less effects from in-plane forces.

AFMs with OBD detectors, either in addition to IDS detectors or solely with OBD detectors can benefit from the approaches described above, with the caveat that the null positions and maximal sensitivity positions on a given cantilever, interacting with a sample will be different for the two detection methods. Despite this, the methodologies described here will still provide significant advantages for OBD spot positioning. It will be obvious to those skilled in the art that the inventions described here can be applied to OBD detectors, albeit at different spot locations. For example, the vertical-longitudinal null point for in-plane modulation measured with interferometry (displacement)as shown in Figure 7 is *x*/*L* ≈ 1, while for the OBD, the corresponding null point is *x*/*L* ≈ 0.6.

The ability to accurately measure vertical response is particularly important against the backdrop of the dramatic growth in automated analysis and experimentation enabled by various developments in machine-learning and artificial intelligence. Some recent examples include Bayesian optimization, unsupervised learning control and structure of domain walls, defects mapping in PZT, and a synthesis-structure-property relationship discovery tools. It is well known that models trained on these data sets will typically have microscope calibration and reproducibility limitations that stem from instrumental crosstalk, sample and probe state variations and limited data sizes - all in addition to the sample properties and functionality questions that were presumably the motivation for the measurements in the first place. To enable these exciting new capabilities on a wider scope and to avoid "garbage-in, garbage-out" scenarios, it is important for the measurements to become as accurate and reproducible as possible. Successful implementation of accurate and dependable electromechanical measurements powered by machine learning approaches holds tantalizing promise for experimental automation for example, in materials combinatorics or materialomics.

## Claims

1. A method for operating a scanning probe microscope, the scanning probe microscope comprising:
a probe having a cantilever with a tip;
a sample and a sample holder arranged to hold the sample for measurement using the tip of the cantilever;
a light source arranged to emit a beam of light onto a surface of the cantilever, the beam forming a measurement spot on the surface of the cantilever;
an actuator assembly configured to adjust the separation between the tip and the sample along the optical axis of the light source;
an optical assembly configured to adjust the position of the measurement spot on the surface of the cantilever; and
a photodetector assembly for measuring light reflected from the surface of the cantilever to locate the surface of the cantilever and to measure motion of the cantilever from light reflected from the measurement spot;
the method comprising executing a computer program to cause the scanning probe microscope to perform each of the following steps:
identifying the location of the measurement spot on the surface of the cantilever using the photodetector assembly; and
executing a calibration procedure to identify a target region for positioning the measurement spot on the surface of the cantilever.

2. A method according to claim 1, wherein the calibration procedure comprises the following steps:
(i) monitoring a first variable at a nominal location on the surface of the cantilever whilst modifying a second variable, wherein the first variable relates to cantilever motion and the second variable relates to an interaction between the tip and the sample, wherein the first variable depends on the second variable;
(ii) calculating a first parameter based on the variation of the first variable in step (i); and
(iii) estimating the proximity of the nominal location to the target region based on the calculated first parameter; wherein the nominal location is determined to be within the target region if the calculated first parameter is within a threshold.

3. A method according to claim 2, wherein the calibration procedure further comprises the following steps:
(iv) adjusting the location of the measurement spot to a further nominal location on the surface of the cantilever if the calculated first parameter exceeds the threshold;
(v) monitoring the first variable at the further nominal location on the surface of the cantilever whilst modifying the second variable;
(vi) calculating a second parameter based on the variation of the first variable in response to the second variable; and
(vii) estimating the proximity of the further nominal location to the target region based on the calculated second parameter; wherein the further nominal location is determined to be within the target region if either: the calculated second parameter is within the threshold; or the magnitude of the calculated second parameter is less than the magnitude of the calculated first parameter.

4. A method according to claim 3, wherein step (iv) comprises adjusting the location of the measurement spot in a first direction if step (ii) indicates that the first parameter is negative, and wherein step (iv) comprises adjusting the location of the measurement spot in a second direction, opposite the first direction, if step (ii) indicates that the first parameter is positive.

5. A method according to claim 4, wherein the first direction and the second direction are along a major axis of the cantilever, or wherein the first direction and the second direction are perpendicular to a major axis of the cantilever.

6. A method according to any of claims 2 to 5, wherein:
the first variable is cantilever motion;
the second variable is an interaction force between the tip and the sample, wherein the actuator assembly is operated to adjust the interaction force between the tip and the sample; and
the first parameter is a difference in motion of the cantilever at the nominal location when the cantilever is moved towards the sample to increase the interaction force compared with when the cantilever is moved away from the sample to decrease the interaction force.

7. A method according to any of claims 2 to 5, wherein the calibration procedure comprises bringing the tip into contact with the surface of the sample, and wherein:
the first variable is an amplitude of the cantilever motion;
the second variable is a driving frequency, wherein the actuator assembly is operated to modulate the separation between the tip and the sample across a range of driving frequencies; and
the first parameter is a characteristic of the amplitude variation which depends on a frequency difference and/or an amplitude difference between a resonance at which the amplitude of the cantilever motion is largest and an antiresonance at which the amplitude of the cantilever motion is smallest.

8. A method according to any of claims 2 to 5, wherein the calibration procedure comprises bringing the tip into contact with the surface of the sample, and wherein:
the first variable is cantilever motion;
the second variable is the location of the tip in the plane of the sample, wherein the tip is moved in a third direction across the sample and a fourth direction opposite to the third direction; and
the first parameter is a difference in motion in the third and fourth directions.

9. A method according to claim 1, wherein the height of the sample varies across a first region on the surface of the sample to form a sample step, wherein the scanning probe microscope comprises a camera, and wherein the calibration procedure comprises:
(i) adjusting the location of the measurement spot to be within the first region;
(ii) imaging the first region with the camera to detect the position of the sample step and the position of the measurement spot;
(iii) bringing the tip towards the surface of the sample in the first region;
(iv) monitoring the cantilever motion when the measurement spot is positioned at a nominal location on the surface of the cantilever whilst scanning the tip across the first region comprising the sample step to detect the position of the sample step;
(v) correlating the measurements in steps (ii) and (iv) to determine the relative position of the measurement spot and the tip; and
(vi) adjusting the location of the measurement spot based on the determined relative position.

10. A method according to claim 1, wherein the scanning probe microscope further comprises a camera, wherein the calibration procedure comprises:
(i) acquiring an image of the tip using the camera;
(ii) identifying the location of the tip from the image; and
(iii) estimating the target region based on the tip location.

11. A method according to any of the preceding claims, wherein the calibration procedure is stored in memory as instructions for execution by one or more processors, preferably without user input.

12. A method according to any of the preceding claims, wherein the cantilever motion is cantilever displacement measured by interferometric detection of the measurement spot using the photodetector assembly.

13. A method according to any of the preceding claims, wherein the method further comprises: calculating a corrective factor based on the identified target region; measuring motion of the cantilever from light reflected from the measurement spot; and multiplying the measured motion by the corrective factor.

14. A method for operating a scanning probe microscope, the scanning probe microscope comprising:
a probe having a cantilever with a tip;
a sample holder arranged to hold a sample for measurement using the tip of the cantilever;
a light source arranged to emit a beam of light onto a surface of the cantilever, the beam forming a measurement spot on the surface of the cantilever;
an actuator assembly configured to adjust the separation between the tip and the sample along the optical axis of the light source;
an optical assembly configured to adjust the position of the measurement spot on the surface of the cantilever; and
a photodetector assembly for measuring light reflected from the surface of the cantilever to locate the surface of the cantilever and to measure motion of the cantilever from light reflected from the measurement spot;
the method comprising executing a computer program to cause the scanning probe microscope to perform each of the following steps:
(i) identifying the cantilever;
(ii) retrieving a target region for a measurement spot on the surface of the cantilever from memory based on the identified cantilever, the target region having been identified by a calibration procedure; and
(iii) positioning the measurement spot in the target region.

15. The method according to claim 14, wherein the calibration procedure is performed according to any of claims 1 to 13.

16. The method of claims 14 or 15, wherein step (i) comprises identifying the cantilever using a bar code, a reference number, or a marker on the surface of the cantilever.

17. The method of claims 14 to 16, wherein step (ii) comprises searching a look up table for an entry corresponding to the identified cantilever, and determining the target region based on the value provided in the look up table.

18. A computer program product comprising instructions which when executed by one or more processors of a scanning probe microscope cause the scanning probe microscope to carry out the method of any of the preceding claims.

19. A scanning probe microscope comprising:
a probe having a cantilever with a tip;
a sample holder arranged to hold a sample for measurement using the tip of the cantilever;
a light source arranged to emit a beam of light onto a surface of the cantilever, the beam forming a measurement spot on the surface of the cantilever;
an actuator assembly configured to adjust the separation between the tip and a sample along the optical axis of the light source, the sample being held by the sample holder;
an optical assembly configured to adjust the position of the measurement spot on the surface of the cantilever; and
a photodetector assembly for measuring light reflected from the surface of the cantilever to locate the surface of the cantilever and to measure motion of the cantilever from light reflected from the measurement spot;
wherein the scanning probe microscope comprises an electronic controller configured to perform the method of any of claims 1 to 17.
